(19) **Europäisches Patentamt**
**European Patent Office**
**Office européen des brevets**

(11) **EP 1 361 467 B1**

(12) **EUROPÄISCHE PATENTSCHRIFT**

(45) Veröffentlichungstag und Bekanntmachung des Hinweises auf die Patenterteilung:
**08.06.2005 Patentblatt 2005/23**

(51) Int Cl.$^7$: **G02B 15/16**, G02B 21/22

(21) Anmeldenummer: **03008278.8**

(22) Anmeldetag: **09.04.2003**

(54) **Mikroskop mit afokalem Zoom**

Microscope comprising an afocal zoom lens system

Microscope comportant un système zoom afocal

(84) Benannte Vertragsstaaten:
**DE FR GB**

(30) Priorität: **10.05.2002 DE 10222041**

(43) Veröffentlichungstag der Anmeldung:
**12.11.2003 Patentblatt 2003/46**

(73) Patentinhaber: **Leica Microsystems (Schweiz) AG**
**9435 Heerbrugg (CH)**

(72) Erfinder:
• **Zimmer, Klaus-Peter**
**9435 Heerbrugg (CH)**

• **Rottermann, Ruedi**
**9442 Berneck (CH)**

(74) Vertreter: **Hössle Kudlek & Partner**
**Patentanwälte,**
**Postfach 10 23 38**
**70019 Stuttgart (DE)**

(56) Entgegenhaltungen:
**US-A- 3 679 286**          **US-B1- 6 320 702**
**US-B1- 6 335 833**

• **ZIMMER, KLAUS-PETER: "Optical Designs for Stereomicroscopes" PROCEEDINGS OF SPIE, Bd. 3482, 1998, Seiten 690-697, XP009013507**

**Beschreibung**

Die Erfindung betrifft einen afokalen Zoom zur Verwendung in Mikroskopen mit einer Tubuslinse, wobei der Zoom von der Objektseite aus gesehen aus vier aufeinanderfolgenden optischen Baugruppen besteht, wobei die erste Gruppe eine positive Brennweite, die zweite Gruppe eine negative Brennweite, die dritte Baugruppe eine positive Brennweite und die vierte Baugruppe eine negative Brennweite aufweist, und wobei die erste und die vierte Baugruppe ortsfest angeordnet sind und zur Veränderung der Vergrößerung des Zooms die zweite und dritte Baugruppe beweglich angeordnet sind, wobei die Zoomvergrößerung mit wachsendem Abstand zwischen der zweiten und der dritten Baugruppe abnimmt. Die Erfindung betrifft weiterhin ein Mikroskop sowie ein Stereomikroskop mit einem solchen afokalen Zoom.

Mikroskope, insbesondere Stereomikroskope, mit einem afokalen Zoom der genannten Art werden überall dort eingesetzt, wo eine hohe Objektvergrößerung vorausgesetzt ist, wie in Technologie-Unternehmen zur Manipulation und zur Inspektion kleiner Objekte, wie beispielsweise Halbleiterstrukturen oder mikromechanische Objekte, in Forschungsinstituten der Biowissenschaften und der Materialkunde sowie beispielsweise zur Untersuchung und Manipulation von Zellen oder auch zu operativen Zwecken. Im Zuge der Miniaturisierung und der Erforschung immer kleinerer Präparate steigen einerseits die Anforderungen an die Auflösung dieser Mikroskope, andererseits gewinnt die Größe des Gesichtsfeldes bei schwacher Vergrößerung zum schnellen Positionieren der Präparate und zur verbesserten Übersicht bei Inspektionen an Bedeutung.

Um bei einem Mikroskop die Vergrößerung zu erhöhen und diese über einen bestimmten Bereich stufenlos verändern zu können, werden diese mit einem Zoom ausgestattet. Ein afokaler Zoom bildet ein Objekt im Unendlichen in ein im Unendlichen liegendes Bild ab. Bezeichnet man mit wE den Winkel zur optischen Achse, unter dem ein Objektpunkt im Unendlichen erscheint, und mit wA den Austrittswinkel nach Durchgang durch den Zoom unter dem der Bildpunkt im Unendlichen erscheint, so beträgt die Vergrößerung des Zooms VZO = tan(wA)/tan(wE). Das Zoomsystem erlaubt eine Vergrößerungsvariation ohne Veränderung der Objekt- und der Bildlage. Das Verhältnis von maximaler zu minimaler Zoomvergrößerung wird Zoomfaktor z genannt.

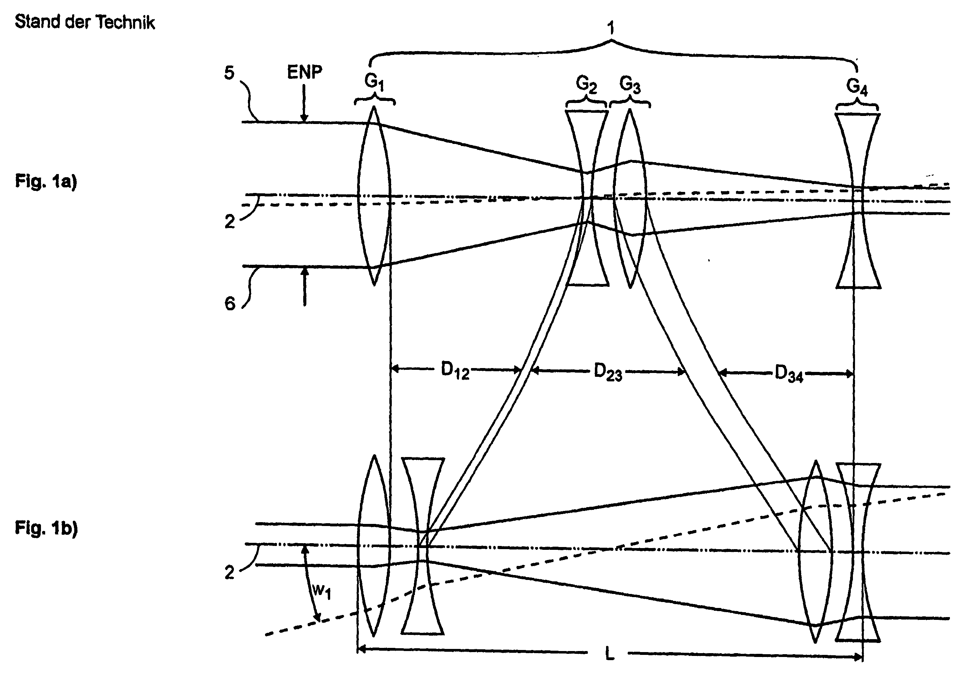

Figur 1 zeigt einen gemäß Oberbegriff des Anspruchs 1 aufgebauten afokalen Zoom 1. Ein derartiger Zoomaufbau ist beispielsweise aus "Optical Designs for Stereomicroscopes", K.-P. Zimmer, in International Optical Design Conference 1998, Proceedings of SPIE, Vol. 3482, Pages 690 - 697 (1998) oder aus der Patentschrift US-6,320,702 bekannt. Der bekannte Zoomtyp besteht vom Objekt aus gesehen aus vier optischen Baugruppen G1, G2, G3 und G4, wobei die Gruppen G1 und G4 ortsfest angeordnet sind. Die Gruppe G1 besitzt eine positive Brennweite f1, die Gruppe G2 eine negative Brennweite f2, die Gruppe G3 wiederum eine positive Brennweite f3 und die vierte Gruppe G4 wiederum eine negative Brennweite f4. Zur Veränderung der Vergrößerung des Zooms werden die beweglich angeordneten Gruppen G2 und G3 verschoben. In Figur 1a) ist die Stellung der höchsten Vergrößerung angedeutet, in Figur 1b) die der geringsten Vergrößerung. Die Lageveränderung der Baugruppen G2 und G3 erfolgt kurvengesteuert längs der optischen Achse 2. Die in der Literatur bekannten Wüllnerschen Gleichungen erlauben, aus einem bekannten Abstand der Brennpunkte der Baugruppen G1 und G4, aus den bekannten Brennweiten f2 und f3 sowie aus einer gewählten Vergrößerung (der Gruppen G2 und G3) die zugehörigen Abstände, nämlich den Abstand D12 zwischen den Baugruppen G1 und G2, den Abstand D23 zwischen den Baugruppen G2 und G3 sowie den Abstand D34 zwischen den Baugruppen G3 und G4, zu berechnen.

Wie in Figur 1 dargestellt, ist D23 minimal bei stärkster Vergrößerung und steigt von dort ausgehend mit abnehmender Zoomvergrößerung, so daß D12 und D34 bei kleinster Zoomvergrößerung minimal werden. Der Zoomfaktor eines solchen Systems ist lediglich dadurch begrenzt, daß sich die Baugruppen G2 und G3 bei maximaler Vergrößerung und die Baugruppen G1 und G2 sowie G3 und G4 bei minimaler Vergrößerung nicht durchdringen dürfen.

Mit ENP ist der Durchmesser der Eintrittspupille des Zooms 1 bei höchster Vergrößerung (Figur 1a)) bezeichnet. Der Durchmesser EP der Eintrittspupille des Zooms ist bei höchster Zoomvergrößerung maximal. Der Eintrittsfeldwinkel wE des Zooms bezeichnet den Sehwinkel, unter dem ein Objekt im Unendlichen erscheint. Dieser Winkel wird bei schwächster Zoomvergrößerung maximal und nimmt den Wert w1 an, wie aus Figur 1b) ersichtlich. Die Baulänge L des Zooms entspricht dem Abstand der äußeren Scheitel der Baugruppen G1 und G4.

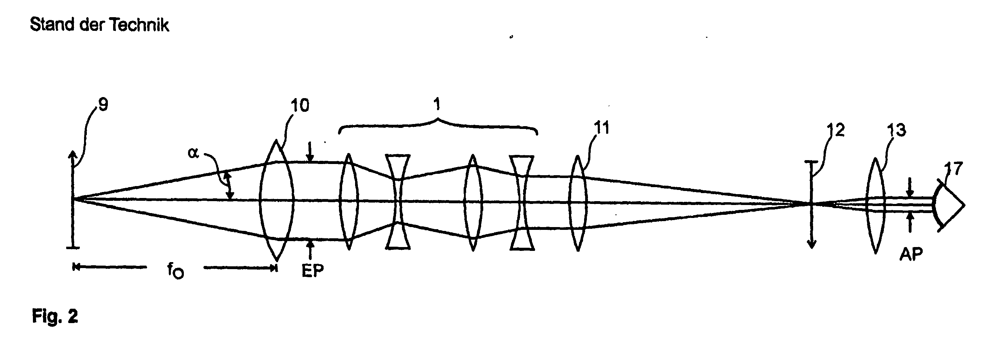

Figur 2 zeigt eine Prinzipskizze eines Mikroskops mit einem afokalen Zoom 1. Ein Objekt 9 ist im vorderen Brennpunkt des Objektivs 10 angeordnet und wird durch dieses nach Unendlich abgebildet. Der nachfolgende afokale Zoom 1 verändert die Vergrößerung in einem auswählbaren Bereich und bildet das Objekt wiederum nach Unendlich ab. Hinter dem Zoom 1 ist eine Tubuslinse 11 angeordnet, die ein Zwischenbild 12 erzeugt, das seinerseits durch ein Okular 13 vom Auge 17 visuell betrachtet wird. Mit EP wird der Durchmesser der Eintrittspupille des Zooms 1 bezeichnet. AP bezeichnet den Durchmesser der Austrittspupille des Mikroskops nach dem Okular 13. Bekanntlich hängt die Auflösung des Mikroskops von der numerischen Apertur nA des Objektives 10 ab, der als Sinus des halben Öffnungswinkels $\alpha$ des Kegels mit Spitze in der Objektmitte, der durch die Eintrittspupille EP begrenzt wird, definiert ist. Für gut korrigierte optische Systeme, die der Sinusbedingung genügen, gilt bekanntlich die Beziehung EP = 2 $\times$ fO nA, wobei fO die Brennweite des Objektivs 10 bezeichnet. Bei einer Wellenlänge von $\lambda$ = 550 nm erhält man für das Auflösungsvermögen als Faustformel 3000 x nA (in Linienpaaren pro Millimeter). Da die numerische Apertur mit dem Durchmesser der Eintrittspupille wächst, ist offensichtlich, daß ein großer Durchmesser EP benötigt wird, um eine hohe Auflösung zu erzielen.

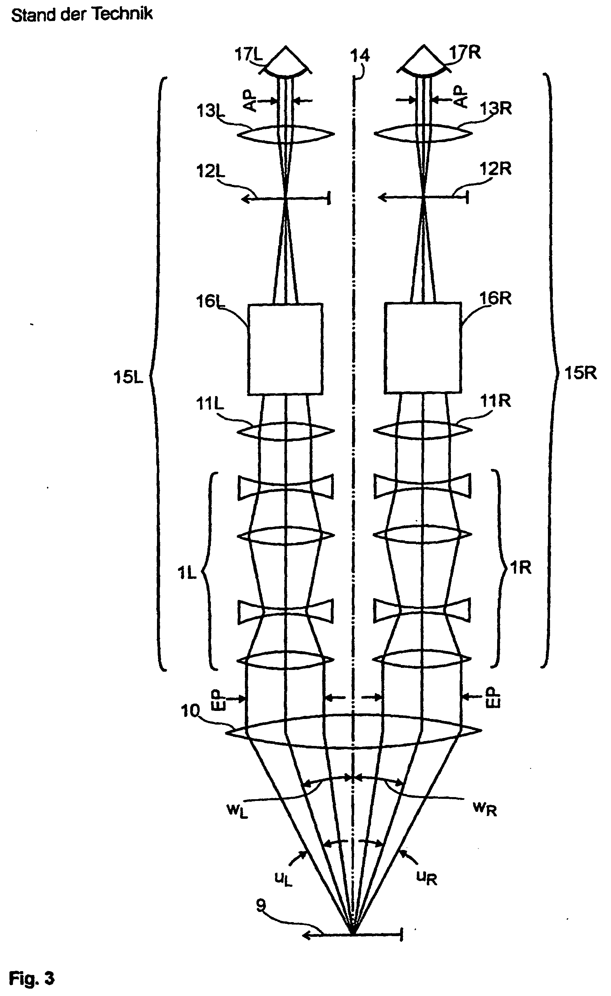

Figur 3 zeigt den schematischen Aufbau eines Stereomikroskops vom Teleskoptyp. Das Stereomikroskop ermöglicht dem Betrachter, einen räumlichen Eindruck des betrachteten Objekts 9 zu erhalten. Hierzu wird das Objekt 9, das sich im vorderen Brennpunkt des Objektivs 10 befindet, über zwei voneinander getrennte Beobachtungskanäle abgebildet. Die beiden Betrachtungskanäle 15L und 15R sind in gleicher Weise aufgebaut und enthalten jeweils ein Zoomsystem 1L, 1R, eine Tubuslinse 11L, 11R und jeweils ein Okular 13L und 13R. Hinter den Tubuslinsen 11L, 11R angeordnete Bildumkehrsysteme 16L, 16R sorgen für seitenrichtige aufrechte Zwischenbilder 12L und 12R, die mit dem Paar gleicher Okulare 13L, 13R von einem Augenpaar 17L und 17R visuell betrachtet werden. Die beiden Zoomsysteme 1L und 1R verändern wahlweise die Vergrößerung, jedoch in gleicher Weise für den rechten und den linken Kanal.

Die beiden Zwischenbilder 12L und 12R sind verschiedene Bilder des Objekts 9, da das Objekt 9 in dem linken Kanal 15L unter dem Winkel wL und im rechten Kanal 15R unter dem Winkel wR betrachtet wird. Auf diese Weise ist eine stereoskopische Betrachtung des Objekts 9 möglich, in gleicher Weise wie bei der Betrachtung eines Objekts durch das Augenpaar. Die beiden unterschiedlichen Bilder werden im Gehirn zu einem dreidimensionalen Bild verarbeitet.

Mit EP wird wiederum der Durchmesser der Eintrittspupille des Zooms benannt, wobei EP für beide, in gleicher Weise verstellbare Zooms 1L und 1R gleich ist. Mit uL und uR sind die halben Öffnungswinkel der Kegel mit Spitze in der Objektmitte, der durch die Eintrittspupille begrenzt wird, bezeichnet. uL und uR sind gleich groß, da das Mikroskop symmetrisch zur Achse 14 des Objektivs 10 ist. uL und uR können folglich gemeinsam mit u benannt werden. Da wR und wL nicht groß sind, gilt analog zum Mikroskop aus Figur 2 die Beziehung EP = $2 \times fO \times \sin(u) = 2 \times fO \times nA$, wobei nA wieder die numerische Apertur darstellt, diesmal jedoch bezogen auf die Eintrittspupille des dem Objektiv 10 nachgeschalteten Zooms in jedem Kanal.

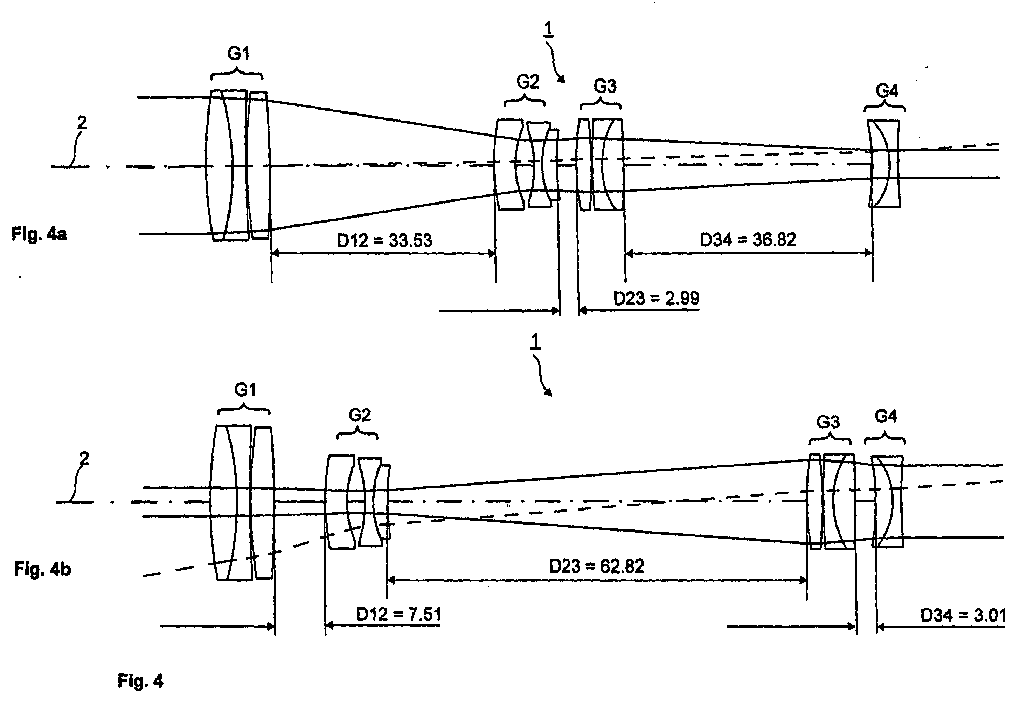

In dem bereits oben erwähnten Artikel von K.-P. Zimmer "Optical Designs for Stereomicroscopes" (1998) ist ein Zoom für ein oben beschriebenes Stereomikroskop vorgestellt, wie es in Figur 4 schematisch dargestellt ist. Einen derartigen Zoom hat die Anmelderin am 3. April 1995 unter der Bezeichnung "MZ 12" auf den Markt gebracht. Dieser Zoom ist gemäß dem Oberbegriff des Anspruchs 1 aufgebaut. Bei größter Vergrößerung VZO des Zooms beträgt der Eintrittspupillendurchmesser ENP = 20 mm, die Abstände der optischen Baugruppen G1, G2, G3, G4 betragen D12 =33,53 mm, D23 = 2,99 mm und D34 = 36,82 mm. Die Brennweiten der Gruppen sind f1 = 65,47 mm, f2 = -15,30 mm, f3 = 32,17 mm und f4 = -43,65 mm. In seiner kleinsten Vergrößerungseinstellung (siehe Figur 4b)) betragen die Abstände D12 = 7,51 mm, D23 = 62,82 mm, D34 = 3,01 mm. Der in Figur 4 dargestellte Zoom besitzt einen Zoomfaktor z von 12,5. Es ist |f1/f2| = 4,28.

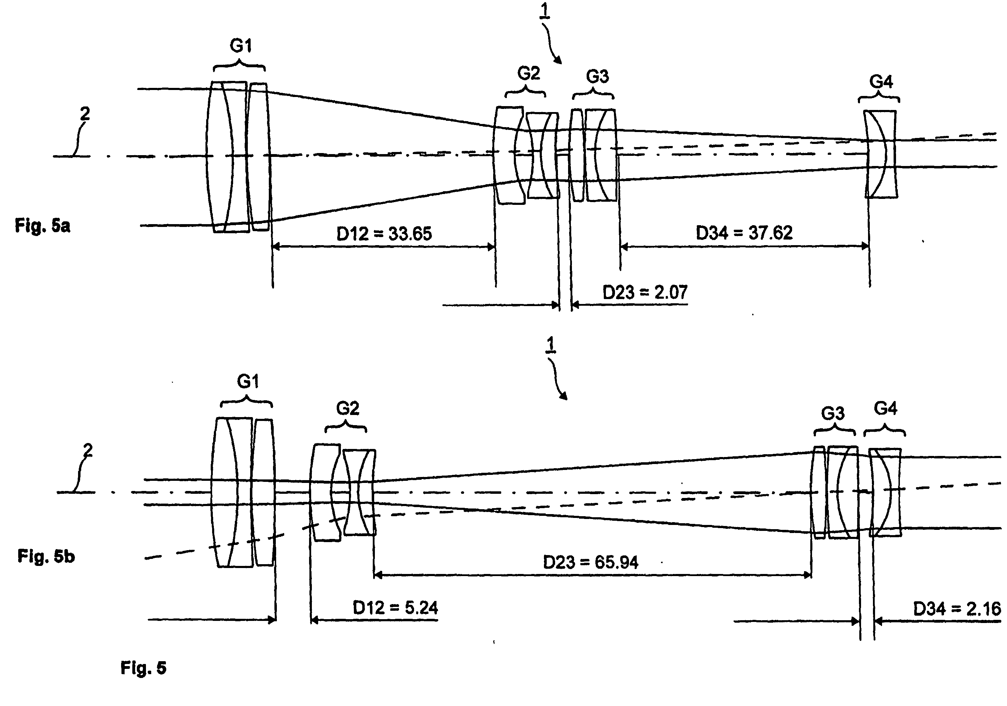

Der in Figur 4 dargestellte Zoom kann entsprechend den aus der Literatur bekannten Wüllnerschen Gleichungen auf einen größeren Zoomfaktor z gebracht werden, indem die optischen Baugruppen G2 und G3 längs der optischen Achse 2 weiter verschoben werden, ohne daß sich die Linsengruppen durchdringen. Wie aus Figur 5a) ersichtlich, ist die Baugruppe G2 um 0,12 mm in Richtung G3 und die Baugruppe G3 um 0,8 mm in Richtung G2 verschoben, so daß der Abstand D23 = 2,07 mm beträgt und demgemäß D12 = 33,65 mm und D34 = 37,62 mm. In dieser Einstellung ist die Zoomvergrößerung VZO = 5,2. In Figur 5b) ist im Vergleich zu der Stellung in Figur 4b) die Baugruppe G2 um 2,27 mm in Richtung G1 und G3 um 0,85 mm in Richtung G4 verschoben. Die Zoomvergrößerung VZO beträgt in dieser Stellung 0,3517. Für den in Figur 5 dargestellten Zoom ergibt sich folglich ein Zoomfaktor z = 14,8. Weiterhin gilt |f1/f2| =4,28 und ferner |z/(f1/f2)| = 3,46.

Nachteil der in Figur 5 dargestellten Konfiguration ist, daß eine Vergrößerung des Zoombereichs in Richtung höherer Vergrößerungen nicht zu einer höheren Auflösung führt. Eine höhere Auflösung kann nur durch größere Eintrittspupillendurchmesser erzielt werden, wobei dies insbesondere bei Stereomikroskopen zu großen Abmessungen führt (siehe Zimmer: "Optical Designs for Stereomicroscopes", 1998, Seite 693). Bei erreichter Auflösungsgrenze führt eine zunehmende Mikroskopvergrößerung zur sogenannten leeren Vergrößerung, bei der trotz steigender Vergrößerung keine weiteren Details erkennbar werden.

Schließlich ist aus der US 6,320,702 B1 ein afokaler Zoom für Mikroskope geschützt, der ebenfalls aus vier optischen Baugruppen G1 bis G4 besteht, die abwechselnd positive und negative Brennweiten aufweisen. Beansprucht werden dort Zooms mit einem Zoomfaktor z > 14 und einem Brennweitenverhältnis der Baugruppen G1 und G2 mit |f1/f2| > 3,9. Als vorteilhafte weitere Bedingung ist dort angegeben 3 < |z/(f1/f2)| < 5. Diese Begrenzung soll einerseits zu große Zoomlängen, andererseits eine Durchdringung der ersten und zweiten Linsengruppen G1 und G2 verhindern.

Der Zoom gemäß US 6,320,702 B1 enthält insgesamt mehr Linsen als der in den Figuren 4 und 5 dargestellte Zoom und weist zudem den in Zusammenhang mit Figur 5 dargestellten Nachteil auf, daß ein höherer Zoomfaktor allein nicht dazu geeignet ist, die Auflösung des Mikroskops zu erhöhen. Zudem ist eine höhere Zoomvergrößerung nachteilig mit einer Reduktion des Durchmessers der Austrittspupille des Mikroskops bei maximaler Vergrößerung gekoppelt.

Aufgabe vorliegender Erfindung ist daher, einen afokalen Zoom der eingangs genannten Art für hochauflösende Mikroskope mit hohem Zoomfaktor anzugeben, der eine kontinuierlich veränderbare Vergrößerung über einen möglichst großen Bereich bei gleichzeitig größtmöglicher Auflösung ermöglicht. Zudem sollen die Anforderungen nach wachsenden Gesichtsfeldern erfüllt sein.

Diese Aufgabe wird durch die Merkmale des unabhängigen Anspruchs 1 erfüllt. Vorteilhafte Ausgestaltungen ergeben sich aus den jeweiligen Unteransprüchen sowie der nachfolgenden Beschreibung.

Die Bedingung $VZO \leq 41 \times ENP/fT$, im folgenden mit (B1)bezeichnet, gibt für die Zoomvergrößerung eine Obergrenze an, die proportional ist zum Verhältnis des Durchmessers ENP der Zoomeintrittspupille bei maximaler Vergrößerung des Zooms zur Brennweite fT der Tubuslinse des Mikroskops. Somit werden die Leistungsdaten des Zooms mit optischen Größen des Mikroskops verknüpft. Die Erfüllung von (B1) garantiert, daß die starke Mikroskopvergrößerung im Bereich der förderlichen Vergrößerung liegt und begrenzt den Kontrastabfall bei kleinen Austrittspupillen.

Als "förderliche Vergrößerung" eines Mikroskops ist der Bereich derjenigen Mikroskopvergrößerung definiert, innerhalb dessen alle Objektstrukturen aufgelöst, vergrößert abgebildet und vom menschlichen Auge erkannt werden. Eine höhere Vergrößerung ist zwar möglich, aber nicht förderlich, da keine weiteren Einzelheiten erkennbar werden, die vom Mikroskopobjektiv wegen begrenzter Auflösung nicht abgebildet werden können (sog. "leere Vergrößerung", bei der sich zwar ein größeres Bild, aber keine feineren Strukturen ergeben). Die Detailerkennbarkeit hängt weiterhin vom Kontrast des Bildes ab. Hierbei spielt der Austrittspupillendurchmesser des Mikroskops eine Rolle, da bei zunehmendem Durchmesser hellere Bilder geliefert werden und der Kontrastverlust durch Beugung im Auge und Unregelmäßigkeiten im Glaskörper des Auges verringert wird.

Die Erfüllung der erfindungsgemäßen Bedingung (B1) stellt für hochauflösende Mikroskope mit ENP > 21mm nun sicher, daß mit wachsender Zoomvergrößerung VZO auch die Detailerkennbarkeit steigt, und daß gleichzeitig der Kontrastabfall, der der Detailerkennbarkeit entgegenwirkt, begrenzt bleibt.

Während (B1) eine Bedingung an den afokalen Zoom bei maximaler Vergrößerung definiert, gibt die nachfolgende Bedingung (B2) eine Anforderung an den Zoom bei niedrigster Vergrößerung an. Erfindungsgemäß lautet (B2): $\tan(w1) \geq 0.268$ mm $\times$ z/ENP. Hierbei ist w1, wie aus Figur 1b) ersichtlich, als Eintrittsfeldwinkel des Zooms bei minimaler Vergrößerung definiert. z stellt hierbei den Zoomfaktor dar, d. h. das Verhältnis maximale Zoomvergrößerung zu minimaler Zoomvergrößerung, wobei z > 15 ist. ENP bezeichnet wieder den Durchmesser der Zoomeintrittspupille bei maximaler Vergrößerung (vgl. Figur 1a)), wobei ENP > 21mm. Die Erfüllung von (B2) garantiert, dass auch bei niedrigster Vergrößerung ein Sehfelddurchmesser (Durchmesser des Zwischenbildes) von mindestens 22 mm nutzbar ist. Diese für ein Mikroskop vorteilhafte Eigenschaft formuliert die Bedingung (B2) anhand der erforderlichen Leistung des Zooms hinsichtlich des Feldwinkels w1 bei minimaler Vergrößerung unter Berücksichtigung des Zoomfaktors z und des maximalen Durchmessers ENP der Eintrittspupille. Auf vorteilhafte Weise wird bewirkt, daß bei Zooms mit gegebenem Durchmesser ENP der Eintrittspupille mit steigendem Zoomfaktor z auch ein größeres Gesichtsfeld nutzbar wird. Dies vermeidet eine Vignettierung bei kleinsten Vergrößerungen und ermöglicht so eine schnelle Positionierung der Präparate und/oder eine verbesserte Übersicht bei Inspektionen.

Vorteilhaft ist eine gleichzeitige Erfüllung der Bedingungen (B1) und (B2), da dann sichergestellt ist, daß beim Arbeiten mit dem erfindungsgemäßen Zoom die Mikroskopvergrößerung im Bereich der förderlichen Vergrößerung liegt, und daß bei niedrigen Vergrößerungen ein großes Gesichtsfeld und bei höchsten Vergrößerungen eine ausreichende Auflösung verfügbar ist.

Es hat sich als vorteilhaft erwiesen, wenn der Durchmesser der Zoomeintrittspupille bei maximaler Vergrößerung der Bedingung 21 mm < ENP $\leq$ 27 mm genügt. Derartige Eintrittspupillendurchmesser eignen sich in der Praxis zur Erfüllung der Bedingung (B1) besonders gut. Größere Eintrittspupillendurchmesser führen in der Praxis, insbesondere bei Stereomikroskopen, zu hohen baulichen Abmessungen und zudem zu stärker werdenden optischen Abbildungsfehlern. Auf der anderen Seite führen kleinere Eintrittspupillendurchmesser zu verringerter Auflösung.

Weiterhin ist für den Zoomfaktor z die Erfüllung der Bedingung 15 < z $\leq$ 20 vorteilhaft. Im Zusammenhang mit den Bedingungen (B1) und (B2) ist bei diesen Zoomfaktoren ein Arbeiten im Bereich der förderlichen Vergrößerung bei genügend großem Gesichtfeld im Bereich niedriger Vergrößerung in der Praxis gut erzielbar.

Die Baulänge des Zooms ist aus ergonomischen wie auch aus herstellungstechnischen Gründen von großer Bedeutung. Ein langer Zoom bewirkt eine große Bauhöhe des Mikroskops und erschwert einen ermüdungsfreien Einblick. Große Eintrittspupillendurchmesser EP und große Zoomfaktoren z sind in Zooms kurzer Baulänge nur schwer zu realisieren. Es hat sich bei den erfindungsgemäßen Zooms als vorteilhaft erwiesen, die Zoomlänge L durch folgende Bedingung (B3) nach oben zu beschränken:

$$L/ENP \leq k \times \sqrt{z} \leq 1{,}37\,\sqrt{z}$$

wobei L die Länge des Zooms, gemessen zwischen den äußeren Linsenscheitel der Baugruppen G1 und G4, und k einen Längenfaktor bezeichnet, der im Bereich 1,34 und 1,37 liegt. Für die weiter unten beschriebenen erfindungsgemäßen Ausführungsformen kann eine Obergrenze mit k = 1,34 eingehalten werden.

Hochauflösende Mikroskope bedingen nach dem oben beschriebenen einen großen Eintrittspupillendurchmesser ENP des Zooms bei maximaler Zoomvergrößerung. Um dennoch eine kurze Baulänge des Zooms realisieren zu können, ist die Konstruktion der Baugruppe G1 vorteilhaft so zu gestalten, daß die Brennweite f1 der Baugruppe G1 trotz großem ENP klein bleibt. Als besonders günstige Bedingung (B4) kann die folgende Ungleichung aufgestellt werden:

$$f1/ENP \leq 3{,}5.$$

Es werden Ausführungsbeispiele erfindungsgemäßer Zooms vorgestellt, die die Bedingung (B4) bei einer Obergrenze von 3,3 anstelle 3,5 erfüllen und somit vorteilhaft zu einer kurzen Baulänge und guter Abbildungsleistung bei großen ENPs beitragen.

Eine nach oben begrenzte Linsenzahl ist fertigungstechnisch vorteilhaft und begrenzt die Kosten. Erfindungsgemäße Zooms mit maximal elf Linsen sind in dieser Hinsicht besonders günstig.

Besonders vorteilhaft ist es für die Herstellkosten des Zooms, wenn die Baugruppe G4 aus maximal zwei miteinander verkitteten Linsen besteht. Weiterhin ist es für die Baugruppe G1 sinnvoll, diese aus einem Kittglied mit nachfolgender Einzellinse aufzubauen, wobei das Kittglied aus zwei miteinander verkitteten Linsen besteht, und wobei die Einzellinse bikonvex ist und im Kittglied die Linse mit positiver Brechkraft zum Objekt zeigt.

Eine besonders günstige Ausführungsform eines erfindungsgemäßen afokalen Zooms gibt Tabelle 1 zum Ausführungsbeispiel 1 an. Diese Ausführungsform wird weiter unten noch näher beschrieben.

Im folgenden sollen anhand der beigefügten Zeichnungen Ausführungsbeispiele die Erfindung und deren Vorteile näher erläutern.

Es zeigen

Figur 1    einen in der Beschreibungseinleitung erläuterten, bekannten Zoom in schematischer Darstellung,

Figur 2    ein in der Beschreibungseinleitung erläutertes Mikroskop mit einem afokalen Zoom gemäß Figur 1 in schematischer Darstellung,

Figur 3    ein in der Beschreibungseinleitung erläutertes Stereomikroskop vom Teleskoptyp in schematischer Darstellung,

Figur 4    einen afokalen Zoom aus dem Stand der Technik,

Figur 5    den afokalen Zoom aus Figur 4 in leichter Modifikation,

Figur 6    die schematische Darstellung eines erfindungsgemäßen afokalen Zooms in einer ersten Ausführungsform,

Figur 7    die Abbildungsleistung des Zooms gemäß Figur 6 bei maximaler und minimaler Vergrößerung,

Figur 8    die schematische Darstellung eines erfindungsgemäßen Zooms in einer zweiten Ausführungsform,

Figur 9    die Abbildungsleistungen des in Figur 8 dargestellten Zooms bei maximaler und minimaler Vergrößerung,

Figur 10    die schematische Darstellung eines erfindungsgemäßen Zooms in einer dritten Ausführungsform,

Figur 11    die Abbildungsleistung des in Figur 10 dargestellten Zooms bei maximaler und minimaler Vergrößerung,

Figur 12    die schematische Darstellung eines erfindungsgemäßen Zooms in einer vierten Ausführungsform und

Figur 13    die Abbildungsleistung des in Figur 12 dargestellten Zooms bei maximaler und minimaler Vergrößerung.

Die Figuren 1 bis 5 wurden im Zusammenhang mit dem Stand der Technik bereits in der Beschreibungseinleitung erörtert. Im folgenden sollen vier Ausführungsformen eines erfindungsgemäßen Zooms zur Verwendung in einem Mikroskop, insbesondere einem Stereomikroskop, dargestellt werden. Die dargestellten Zooms leuchten in Kombination mit einem Tubus der Brennweite fT = 160 mm einen Zwischenbilddurchmesser von 22 mm aus. Die Erfindung ist jedoch keinesfalls auf diese Tubusbrennweite beschränkt.

**Erste Ausführungsform**

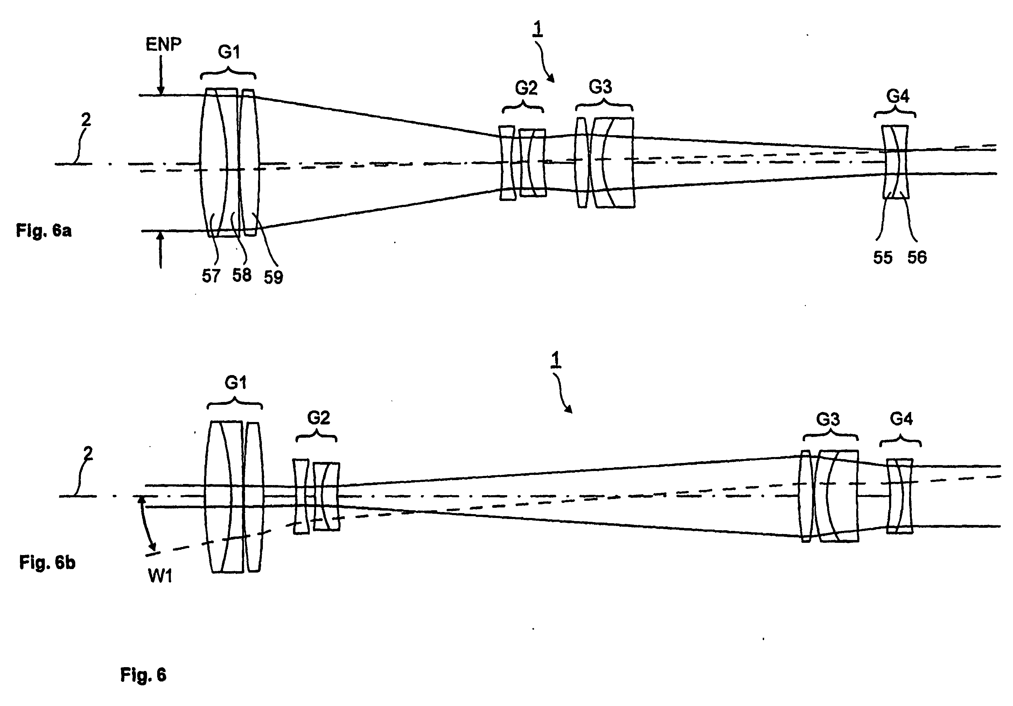

Der in Figur 6 dargestellte Zoom 1 besteht aus vier optischen Baugruppen G1, G2, G3 und G4, von denen G1 und G4 ortsfest angeordnet sind, während G2 und G3 entlang der optischen Achse 2 zur Einstellung der Vergrößerung VZO des Zooms 1 verschoben werden können. Figur 6a) zeigt die Zoomstellung mit einer maximalen Zoomvergrößerung VZO = 5,66, für die der Durchmesser der Eintrittspupille mit ENP = 22,5 mm maximal wird. Figur 6b) zeigt die Zoomeinstellung bei geringster Vergrößerung mit VZO = 0,35, so daß sich als Zoomfaktor z = 16 ergibt. Bei minimaler Vergrößerung beträgt der Eintrittsfeldwinkel des Zooms w1 = 11,23°.

Hieraus ergibt sich für die Bedingung (B1): VZO ≤ 41 × ENP/fT = 41 × 22,5 mm/160 mm = 5,77, so daß der Zoom mit seiner Maximalvergrößerung von 5,66 die Bedingung (B1) erfüllt.

Für die zweite Bedingung (B2) ergibt sich: tan(w1) = 0,20 ≥ 0,268 × z/ENP = 0,268 × 16/22,5 = 0,19, so daß auch die Bedingung (B2) erfüllt ist.

Das Verhältnis der Baulänge L des Zooms 1 zum maximalen Eintrittspupillendurchmesser ENP beträgt im dargestellten Beispiel L/ENP = 5,33, so daß die Bedingung (B3) mit 5,33 ≤ 1,37 × $\sqrt{z}$ = 1,37 × 4 = 5,48 ebenfalls erfüllt ist.

Mit einer Brennweite f1 = 73,06 mm für die optische Baugruppe G1 des Zooms 1 ergibt sich für die Bedingung (B4): f1/ENP = 3,25 ≤ 3,5.

Zusammenfassend lässt sich feststellen, daß für die dargestellte Ausführungsform alle vier Bedingungen (B1) bis (B4) erfüllt werden, so daß der erfindungsgemäße Zoom eine starke Mikroskopvergrößerung garantiert, die im Bereich der förderlichen Vergrößerung liegt, und die Betrachtung des Objektbildes bei einem nutzbaren Sehfelddurchmesser von 22 mm bei ausreichendem Kontrast ermöglicht. Die Baulänge des Zooms ist mit L = 120 mm kleiner als vergleichbare Zooms und somit ausreichend klein, um eine ergonomisch und herstellungstechnisch günstige Bauhöhe des Mikroskops sicherzustellen. Dies wird auch durch die relativ kurze Brennweite von f1 = 73,06 mm bei ENP = 22,5 mm unterstützt.

Wie aus Figur 6a ersichtlich, weist die optische Baugruppe G1 von der Objektseite her betrachtet zunächst ein Kittglied, in der eine Linse 57 mit positiver und eine Linse 58 mit negativer Brennkraft verkittet sind, und eine nachfolgende Einzellinse 59 auf. Im Kittglied ist die Linse 57 mit positiver Brechkraft nach außen gewandt. Die Einzellinse 59 ist bikonvex. Dieser Aufbau ergibt insgesamt fünf Linsenflächen. Die optische Baugruppe G2 besteht aus einer Einzellinse und einem Kittglied (Flächennummern 6 bis 10), die Baugruppe G3 besteht ebenfalls aus einer Einzellinse und einem Kittglied (Flächennummern 11 bis 15), besitzt jedoch im Gegensatz zur Baugruppe G2 positive Brechkraft. Die Baugruppe G4 ist schließlich als ein einziges zweilinsiges Kittglied mit negativer Brechkraft ausgebildet (Flächennummern 16 bis 18). Nachfolgende Tabelle 1 gibt die numerischen Daten dieses Zooms an.

Tabelle 1

| Flächennummer | Radius [mm] | Abstand [mm] | $n_d$ | $\nu_d$ | $P_{g,F}$ | $P_{C,t}$ |
|---|---|---|---|---|---|---|
| 1 | 61.31 | 4.55 | 1.49700 | 81.6 | 0.5375 | 0.8236 |
| 2 | -42.17 | 2.0 | 1.74400 | 44.8 | 0.5655 | 0.7507 |
| 3 | -775.05 | 0.1 | | | | |
| 4 | 92.37 | 3.35 | 1.49700 | 81.6 | 0.5375 | 0.8236 |
| 5 | -92.37 | D1 41.59 ÷ 5.51 | | | | |
| 6 | -42.45 | 1.5 | 1.48749 | 70.2 | 0.5300 | 0.8924 |
| 7 | 23.20 | 1.72 | | | | |
| 8 | -57.04 | 1.2 | 1.62041 | 60.3 | 0.5427 | 0.8291 |
| 9 | 12.31 | 2.6 | 1.78470 | 26.3 | 0.6135 | 0.6726 |
| 10 | 30.51 | D2 5.31 ÷ 78.67 | | | | |
| 11 | 44.65 | 2.46 | 1.49700 | 81.6 | 0.5375 | 0.8236 |
| 12 | -44.65 | 0.2 | | | | |
| 13 | 26.40 | 2.1 | 1.74950 | 35.3 | 0.5869 | 0.7140 |
| 14 | 13.95 | 5.1 | 1.49700 | 81.6 | 0.5375 | 0.8236 |

Tabelle 1   (fortgesetzt)

| Flächennummer | Radius [mm] | Abstand [mm] | $n_d$ | $\nu_d$ | $P_{g,F}$ | $P_{C,t}$ |
|---|---|---|---|---|---|---|
| 15 | 94.46 | D3 42.84 ÷ 5.56 | | | | |
| 16 | -26.60 | 2.2 | 1.67270 | 32.1 | 0.5988 | 0.7046 |
| 17 | -14.16 | 1.2 | 1.51633 | 64.1 | 0.5353 | 0.8687 |
| 18 | 45.96 | | | | | |

In den Spalten der Tabelle sind von links nach rechts die Flächennummer, der Krümmungsradius, der Abstand zur nächsten Fläche, die Brechzahl $n_d$, die Dispersion $\nu_d$ und die partiellen Teildispersionen $P_{g,F}$ und $P_{C,t}$ aufgelistet. Es bedeuten $n_d$ der Brechungsindex, $\nu_d = (n_d -1) / (n_F - n_C)$ die Abbezahl, $P_{g,F} = (n_g - n_F) / (n_F - n_C)$ die relative Teildispersion für die Wellenlängen $g$ und $F$, und $P_{C,t} = (n_C - n_t) / (n_F - n_C)$ die relative Teildispersion für die Wellenlängen $C$ und $t$. Ein Luftabstand ist durch eine Leerzeile in der Materialangabe gekennzeichnet. D1, D2 und D3 sind die veränderlichen Abstände.

Die Wellenlängen sind hierbei wie folgt definiert: die gelbe Heliumlinie d mit $\lambda$ = 587,56 nm, die blaue Quecksilberlinie g mit $\lambda$ = 435,83 nm, die blaue Wasserstofflinie F mit $\lambda$ = 486,13 nm, die rote Wasserstofflinie C mit $\lambda$ = 656,27 nm und die infrarote Quecksilberlinie t mit $\lambda$ = 1013,98 nm.

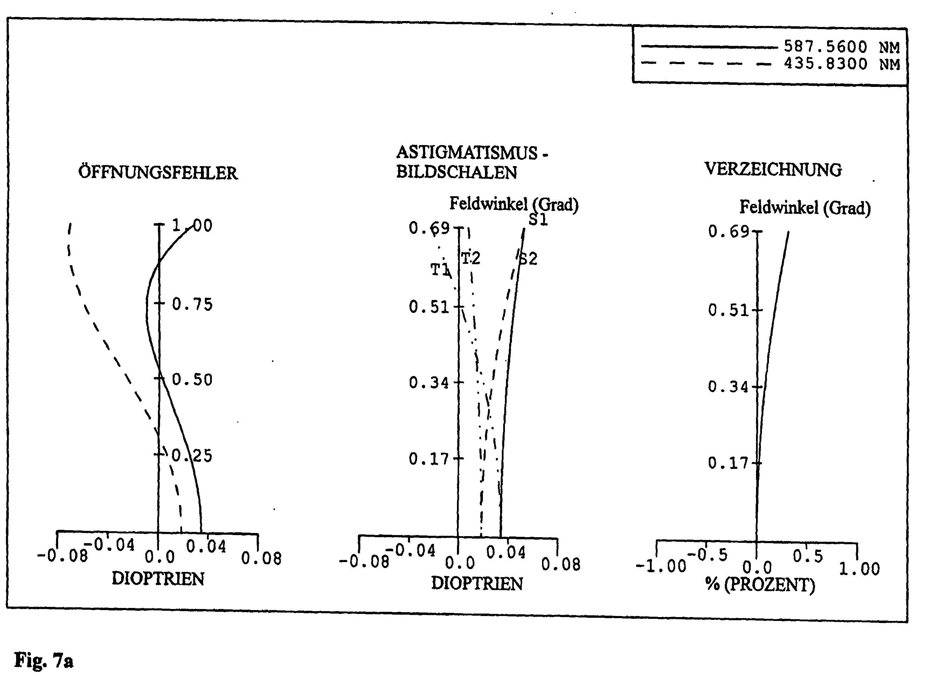

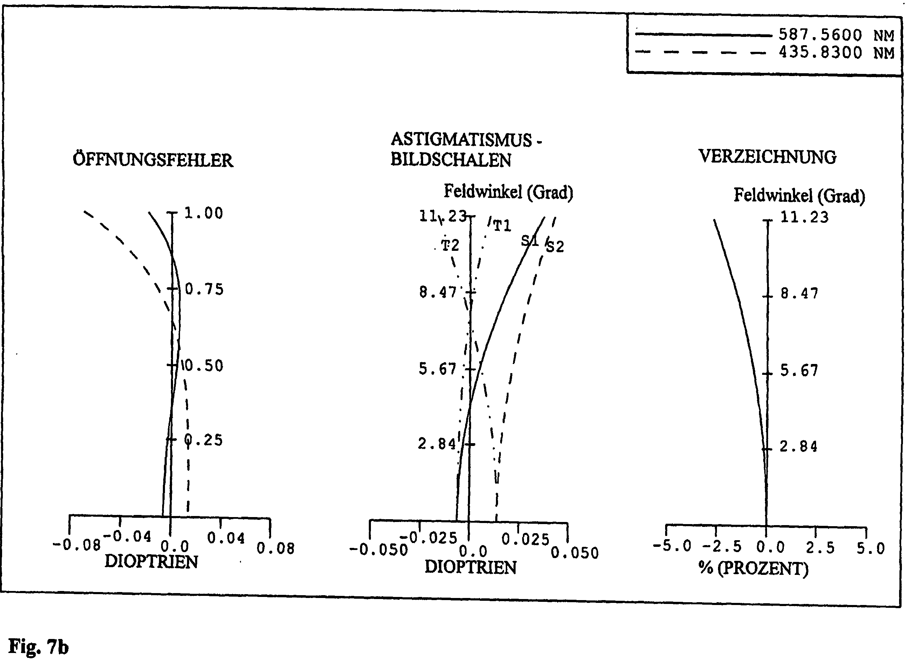

Figur 7 stellt nun die Abbildungsleistung des Zooms aus Figur 6 dar. Figur 7a) zeigt die Abbildungsleistung bei maximaler Zoomvergrößerung von VZO = 5,66, während die Figur 7b) die Abbildungsleistung bei minimaler Zoomvergrößerung VZO = 0,35 darstellt. Aufgetragen sind sphärische Aberration, Astigmatismus und Verzeichnung für zwei Wellenlängen, nämlich die d-Linie bei $\lambda$ = 587,56 nm und die g-Linie mit $\lambda$ = 435,83 nm. Der Öffnungsfehler ist in Dioptrien in Abhängigkeit von der Pupillenhöhe angegeben. Die Bildschalen und die Verzeichnung sind über den Feldwinkel in Dioptrien bzw. Prozent aufgetragen. Beim Astigmatismus ist zudem zwischen der meridionalen und der sagittalen Schale unterschieden.

Der Zoom hat eine gute Korrektion des Öffnungsfehlers (sphärische Aberration) und eine gute Korrektion der Farbfehler (chromatische Aberration), insbesondere eine deutliche Reduktion des sekundären Spektrums, wie am Verlauf der Aberrationskurven für die Wellenlänge 435,83 nm zu erkennen ist. Astigmatismus, Bildfeldwölbung und Verzeichnung sind so gestaltet, daß eine Kompensation der üblichen Abbildungsfehler von Tubuslinse und Okular erfolgt. Der bereits beschriebene Aufbau der optischen Baugruppe G1 ermöglich es, einerseits den Öffnungsfehler bei großem Durchmesser ENP im Falle maximaler Vergrößerung und andererseits den Astigmatismus für einen großen Feldwinkel w1 im Falle der schwächsten Vergrößerung zu korrigieren. Durch eine geeignete Anordnung einer Blende im Zoom lässt sich vorteilhaft erreichen, daß bei einer Erhöhung der Vergrößerung VZO die numerische Apertur des Mikroskops und damit die, wie oben ausgeführt, daran gekoppelte Auflösung des Mikroskops stetig steigt.

### Zweite Ausführungsform

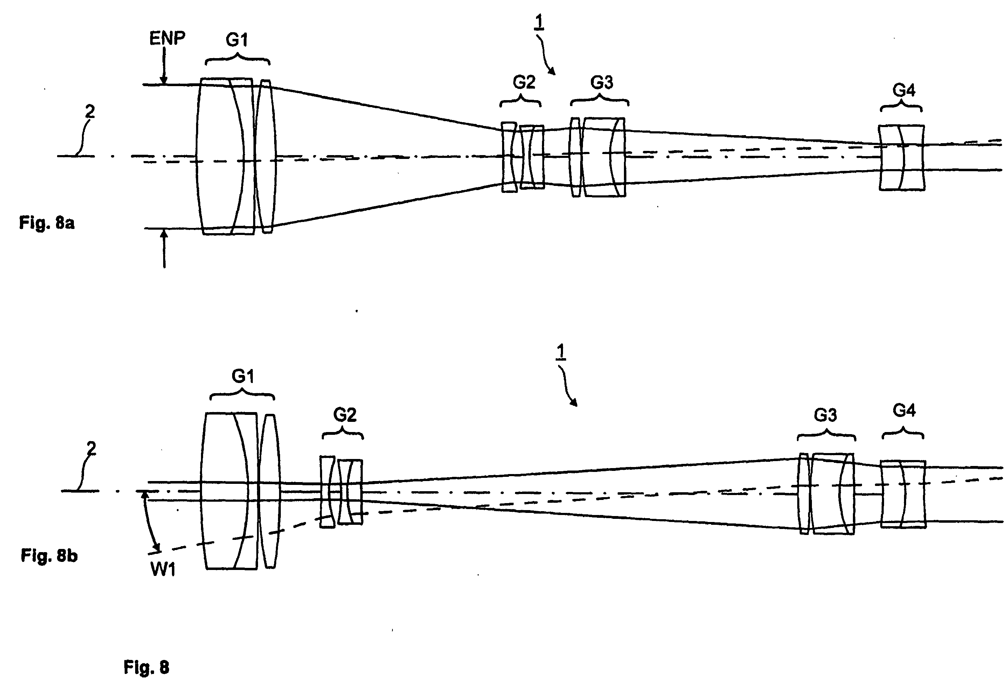

Die Figur 8 zeigt die schematische Darstellung eines weiteren erfindungsgemäßen Zooms 1 mit einem Durchmesser der Eintrittspupille bei maximaler Zoomvergrößerung von ENP = 27 mm, bei einer maximalen Zoomvergrößerung von VZO = 5,66. Der Eintrittsfeldwinkel w1 des Zooms 1 bei minimaler Vergrößerung beträgt 11,14° bei VZO = 0,35, so daß sich insgesamt ein Zoomfaktor von z = 16 ergibt.

Hieraus berechnet sich für die Bedingung (B1): vZO ≤ 41 × ENP/fT = 41 × 27/160 = 6,92, so daß die Maximalvergrößerung von VZO = 5,66 diese Bedingung erfüllt. Weiterhin gilt tan(w1) = 0,20 ≥ 0,268 × 16/27 = 0,16, was der Bedingung (B2) genügt.

Die Baulänge des in Figur 8 dargestellten Zooms beträgt L = 140 mm, so daß L/ENP = 5,19 ≤ 1,37 × $\sqrt{z}$ = 5,48, womit die Bedingung (B3) erfüllt ist. Schließlich beträgt bei einer Brennweite f1 = 76,43 mm das Verhältnis f1/ENP = 2,83, womit die Bedingung (B4) ebenfalls erfüllt ist. Der in Figur 8 dargestellt Zoom besitzt folglich sämtliche mit der Erfüllung der genannten Bedingungen verknüpften Vorteile, wie sie bereits für die erste Ausführungsform dargelegt worden sind.

Nachfolgende Tabelle 2 gibt die numerischen Daten des Zooms aus Figur 8 an, wobei für die Flächennummern das im Zusammenhang mit Figur 6 Gesagte gilt.

Tabelle 2

| Flächennummer | Radius [mm] | Abstand [mm] | $n_d$ | $\nu_d$ | $P_{g,F}$ | $P_{C,t}$ |
|---|---|---|---|---|---|---|
| 1 | 95.60 | 9.17 | 1.49700 | 81.6 | 0.5375 | 0.8236 |

Tabelle 2   (fortgesetzt)

| Flächennummer | Radius [mm] | Abstand [mm] | $n_d$ | $\nu_d$ | $P_{g,F}$ | $P_{C,t}$ |
|---|---|---|---|---|---|---|
| 2 | -40.60 | 2.0 | 1.74400 | 44.8 | 0.5655 | 0.7507 |
| 3 | -308.35 | 0.1 | | | | |
| 4 | 72.31 | 4.09 | 1.49700 | 81.6 | 0.5375 | 0.8236 |
| 5 | -98.39 | D1 43.98 ÷ 7.94 | | | | |
| 6 | -82.59 | 1.5 | 1.48749 | 70.2 | 0.5300 | 0.8924 |
| 7 | 17.46 | 2.34 | | | | |
| 8 | -27.87 | 1.2 | 1.62041 | 60.3 | 0.5427 | 0.8291 |
| 9 | 17.84 | 2.67 | 1.78470 | 26.3 | 0.6135 | 0.6726 |
| 10 | 113.74 | D2 5.12 ÷ 84.85 | | | | |
| 11 | 48.45 | 2.31 | 1.49700 | 81.6 | 0.5375 | 0.8236 |
| 12 | -64.60 | 0.1 | | | | |
| 13 | 38.96 | 5.56 | 1.74950 | 35.3 | 0.5869 | 0.7140 |
| 14 | 17.14 | 2.82 | 1.49700 | 81.6 | 0.5375 | 0.8236 |
| 15 | -269.15 | D3 49.25 ÷ 5.56 | | | | |
| 16 | -33.02 | 4.26 | 1.67270 | 32.1 | 0.5988 | 0.7046 |
| 17 | -17.55 | 3.53 | 1.51633 | 64.1 | 0.5353 | 0.8687 |
| 18 | 52.77 | | | | | |

In den Spalten der Tabelle sind von links nach rechts die Flächennummer, der Krümmungsradius, der Abstand zur nächsten Fläche, die Brechzahl $n_d$, die Dispersion $\nu_d$ und die partiellen Teildispersionen $P_{g,F}$ und $P_{C,t}$ aufgelistet. Es bedeuten $n_d$ der Brechungsindex, $\nu_d = (n_d$ -1) / $(n_F$ - $n_c)$ die Abbezahl, $P_{g,F} = (n_g$ - $n_F)$ / $(n_F$ - $n_c)$ die relative Teildispersion für die Wellenlängen $g$ und $F$, und $P_{C,t} = (n_C$ - $n_t)$ / $(n_F$ - $n_C)$ die relative Teildispersion für die Wellenlängen $C$ und $t$. Ein Luftabstand ist durch eine Leerzeile in der Materialangabe gekennzeichnet. D1, D2 und D3 sind die veränderlichen Abstände.

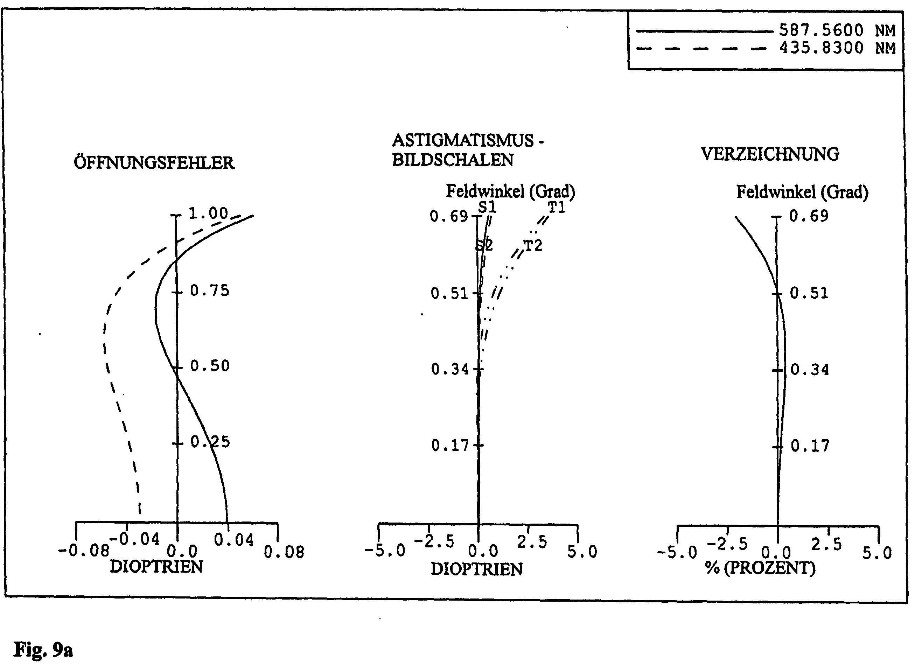

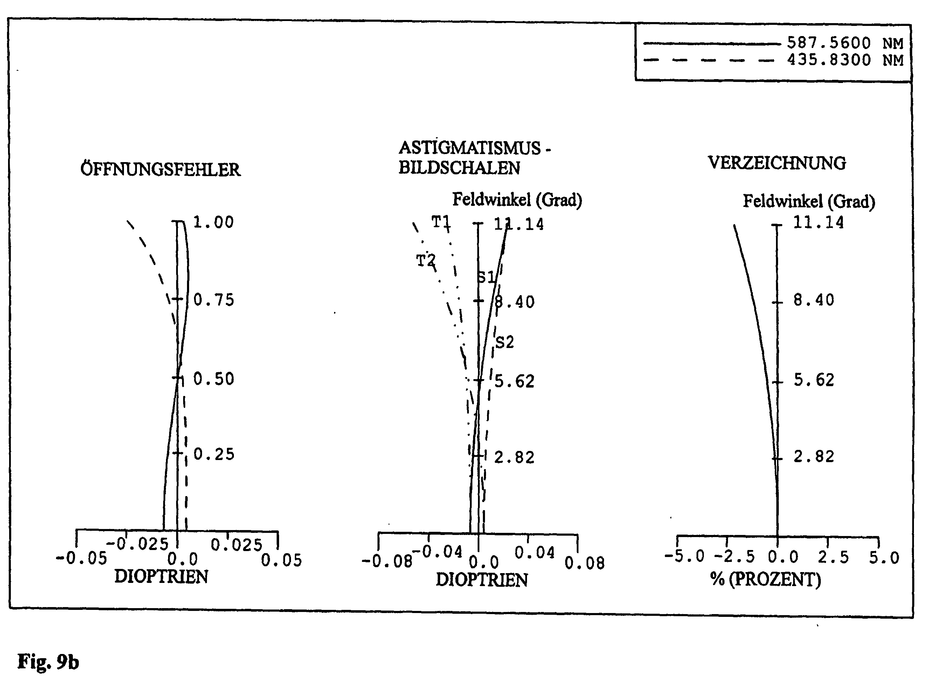

Figur 9 zeigt die Abbildungsleistung des erfindungsgemäßen Zooms gemäß der zweiten Ausführungsform bei der maximalen Vergrößerung von VZO = 5,66 (Figur 9a)) sowie bei der minimalen Vergrößerung von VZO = 0,35 (Figur 9b)). Bezüglich den Einzelheiten sei auf die bereits im Zusammenhang mit dem ersten Ausführungsbeispiel erläuterte Figur 7 verwiesen.

### Dritte Ausführungsform

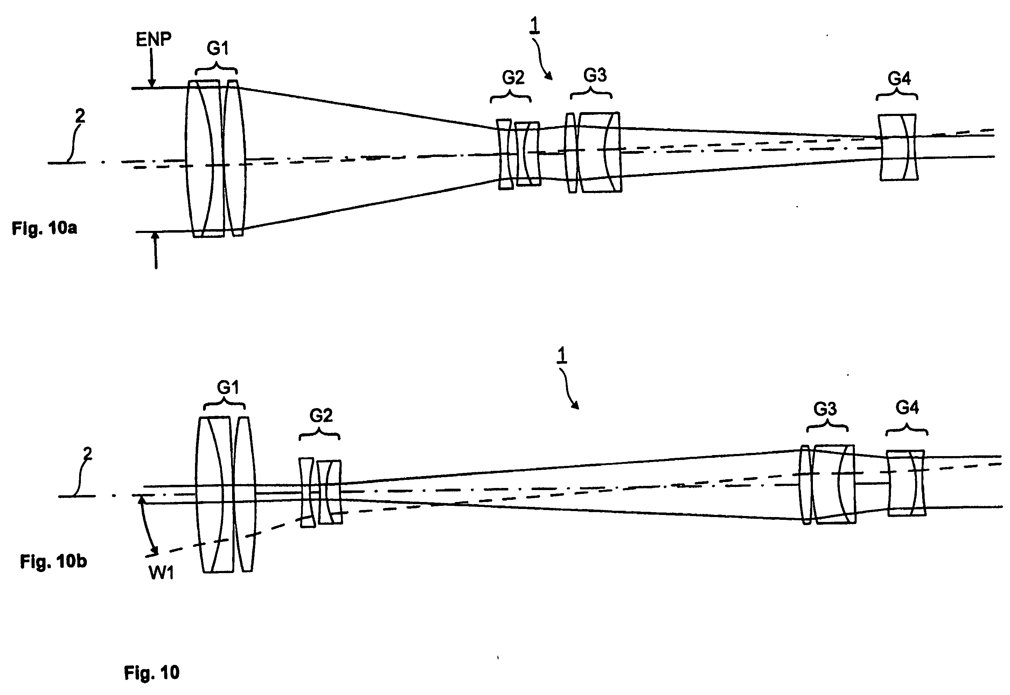

Figur 10 zeigt einen erfindungsgemäßen Zoom gemäß einer weiteren Ausführungsform in schematischer Darstellung. Sowohl die maximale Zoomvergrößerung als auch der maximale Durchmesser der Eintrittspupille sind bei diesem Zoom deutlich erhöht. Der maximale Durchmesser der Eintrittspupille des Zooms 1 bei einer maximalen Zoomvergrößerung von VZO = 6,76 beträgt ENP = 27 mm. Bei einer minimalen Zoomvergrößerung von VZO = 0,34 beträgt der Zoomeintrittswinkel w1 = 11,59°, so daß sich folgendes ergibt:

(B1) $VZO \leq 41 \times ENP/fT = 41 \times 27/160 = 6,92$. Mit einer Maximalvergrößerung von VZO = 6,76 wird die Obergrenze von (B1) unterschritten.

(B2) $\tan(w1) = 0,2 \geq 0,268 \times z/ENP = 0,268 \times 20/27 = 0,20$, so daß auch der Bedingung (B2) genüge getan ist.

Die Baulänge des Zooms beträgt in diesem Fall 140 mm, so daß gilt $L/ENP = 5,19 \leq 1,37 \times \sqrt{z} = 6,13$, womit die Bedingung (B3) erfüllt ist. Die optische Baugruppe G1 des in Figur 10 dargestellten Zooms besitzt eine Brennweite von f1 = 79,86 mm, so daß f1/ENP = 2,96 ≤ 3,5, womit auch die Bedingung (B4) erfüllt ist.

Zu den aus der Erfüllung der genannten Bedingungen sich ergebenden Vorteilen gilt das bereits oben Ausgeführte. Nachfolgende Tabelle gibt die numerischen Daten des in Figur 10 dargestellten Zooms für jede einzelne Flächennummer an.

Tabelle 3

| Flächennummer | Radius [mm] | Abstand [mm] | $n_d$ | $\nu_d$ | $P_{g,F}$ | $P_{C,t}$ |
|---|---|---|---|---|---|---|
| 1 | 102.52 | 5.07 | 1.49700 | 81.6 | 0.5375 | 0.8236 |
| 2 | -42.42 | 2.0 | 1.74400 | 44.8 | 0.5655 | 0.7507 |
| 3 | -312.91 | 0.1 | | | | |
| 4 | 76.50 | 4.05 | 1.49700 | 81.6 | 0.5375 | 0.8236 |
| 5 | -102.65 | D1 49.35 ÷ 9.02 | | | | |
| 6 | -46.18 | 1.5 | 1.48749 | 70.2 | 0.5300 | 0.8924 |
| 7 | 20.39 | 1.96 | | | | |
| 8 | -46.61 | 1.2 | 1.62041 | 60.3 | 0.5427 | 0.8291 |
| 9 | 13.60 | 2.67 | 1.78470 | 26.3 | 0.6135 | 0.6726 |
| 10 | 40.59 | D2 5.26 ÷ 88.89 | | | | |
| 11 | 44.20 | 2.35 | 1.49700 | 81.6 | 0.5375 | 0.8236 |
| 12 | -58.28 | 0.1 | | | | |
| 13 | 32.66 | 5.13 | 1.74950 | 35.3 | 0.5869 | 0.7140 |
| 14 | 15.09 | 2.99 | 1.49700 | 81.6 | 0.5375 | 0.8236 |
| 15 | 437.12 | D3 50.13 ÷ 6.83 | | | | |
| 16 | -29.87 | 4.95 | 1.67270 | 32.1 | 0.5988 | 0.7046 |
| 17 | -15.67 | 1.2 | 1.51633 | 64.1 | 0.5353 | 0.8687 |
| 18 | 43.26 | | | | | |

In den Spalten der Tabelle sind von links nach rechts die Flächennummer, der Krümmungsradius, der Abstand zur nächsten Fläche, die Brechzahl $n_d$, die Dispersion $\nu_d$ und die partiellen Teildispersionen $P_{g,F}$ und $P_{C,t}$ aufgelistet. Es bedeuten $n_d$ der Brechungsindex, $\nu_d = (n_d - 1) / (n_F - n_C)$ die Abbezahl, $P_{g,F} = (n_g - n_F) / (n_F - n_C)$ die relative Teildispersion für die Wellenlängen $g$ und $F$, und $P_{C,t} = (n_C - n_t) / (n_F - n_C)$ die relative Teildispersion für die Wellenlängen $C$ und $t$. Ein Luftabstand ist durch eine Leerzeile in der Materialangabe gekennzeichnet. D1, D2 und D3 sind die veränderlichen Abstände.

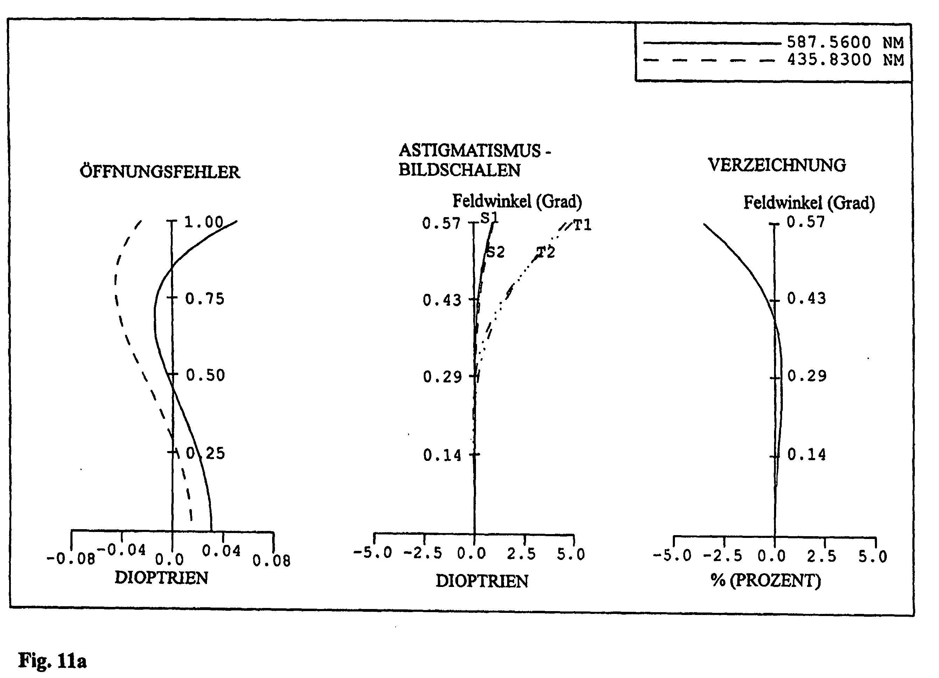

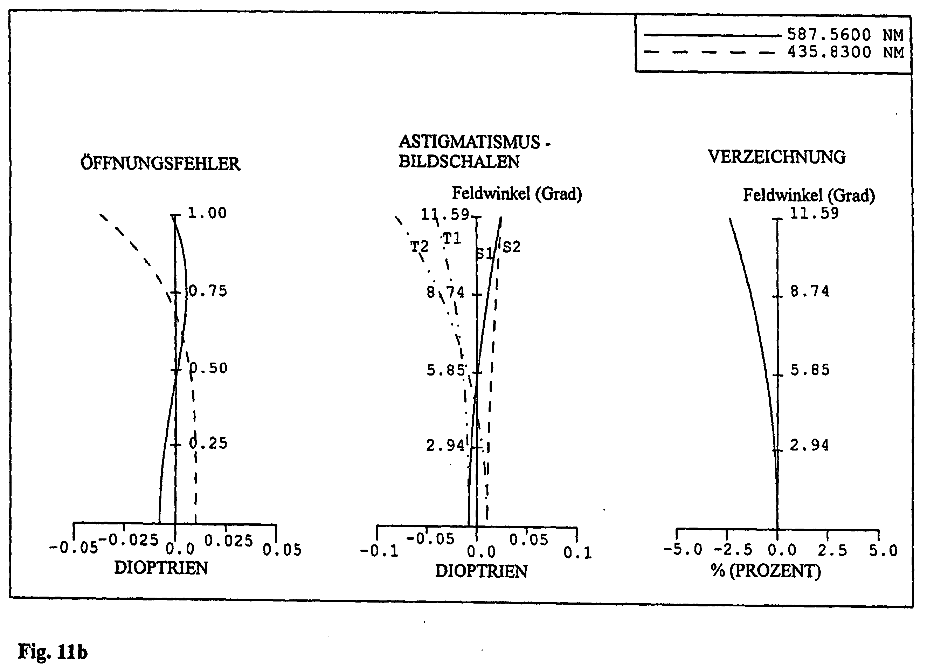

Figur 11 zeigt die Abbildungsleistung der dritten Ausführungsform des erfindungsgemäßen Zooms, wobei in Figur 11a) sphärische Aberration, Astigmatismus und Verzeichnung bei einer maximalen Vergrößerung von VZO = 6,76 und in Figur 11b) bei einer minimalen Vergrößerung von VZO = 0,34 dargestellt sind. Zu den Einzelheiten dieser Darstellung und den sich daraus ergebenden Eigenschaften sei auf den ähnlich aufgebauten Zoom der ersten Ausführungsform (siehe dort Figur 7) verwiesen.

**Vierte Ausführungsform**

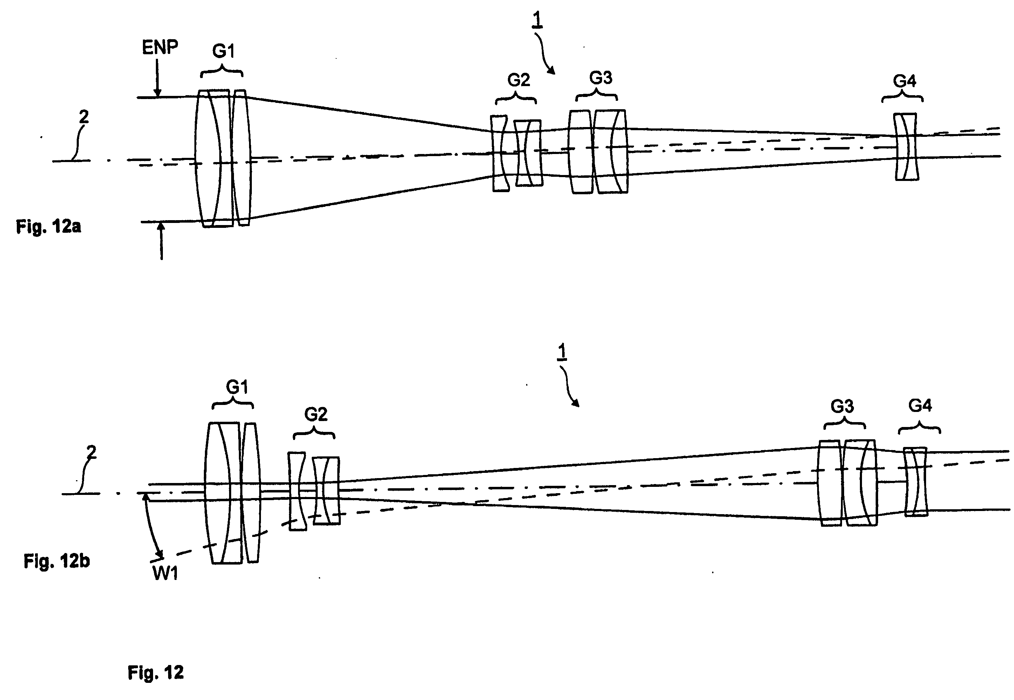

Figur 12 zeigt schließlich eine vierte Ausführungsform des erfindungsgemäßen Zooms 1, wiederum in einem ähnlichen Aufbau wie die vorhergehenden Ausführungsformen, wobei in diesem Beispiel ein hoher Zoomfaktor von z = 20 mit einem kleineren maximalen Eintrittspupillendurchmesser von ENP = 22,5 mm verknüpft ist. Die maximale Zoomvergrößerung beträgt VZO= 5,66, wie in Figur 12a) dargestellt ist, der maximale Eintrittsfeldwinkel des Zooms beträgt bei minimaler Vergrößerung w1 = 13,88°. Die Brennweite f1 der ersten optischen Baugruppe G1 ist f1 = 73,48 mm. Hieraus folgt:

(B1) VZO ≤ 41 × ENP/fT = 41 × 22,5/160 = 5,77, so daß die maximale Zoomvergrößerung von 5,66 unterhalb dieser Obergrenze verbleibt.
(B2) tan(w1) = 0,25 ≥ 0,268 × z/ENP = 0,268 × 20/22,5 = 0,24.
(B3) L/ENP = 5,78 ≤ 1,37 × $\sqrt{z}$ = 6,13.
(B4) f1/ENP = 3,27 ≤ 3,5.

Somit vereint auch der in Figur 12 dargestellte erfindungsgemäße Zoom alle Vorteile, die durch die Erfüllung der Bedingungen (B1) bis (B4) gegeben sind. Nachfolgende Tabelle 4 gibt die numerischen Daten für jede der 18 Flächen des Zoomaufbaus aus Figur 12 wieder.

Tabelle 4

| Flächennummer | Radius [mm] | Abstand [mm] | $n_d$ | $\nu_d$ | $P_{g,F}$ | $P_{C,t}$ |
|---|---|---|---|---|---|---|
| 1 | 70.76 | 4.39 | 1.49700 | 81.6 | 0.5375 | 0.8236 |
| 2 | -42.39 | 2.0 | 1.74400 | 44.8 | 0.5655 | 0.7507 |
| 3 | -478.21 | 0.1 | | | | |
| 4 | 78.22 | 3.37 | 1.49700 | 81.6 | 0.5375 | 0.8236 |
| 5 | -104.35 | D1 44.01 ÷ 5.4 | | | | |
| 6 | -133.05 | 1.5 | 1.48749 | 70.2 | 0.5300 | 0.8924 |
| 7 | 15.41 | 3.22 | | | | |
| 8 | -26.68 | 1.2 | 1.62041 | 60.3 | 0.5427 | 0.8291 |
| 9 | 15.90 | 2.70 | 1.78470 | 26.3 | 0.6135 | 0.6726 |
| 10 | 79.38 | D2 5.11 ÷ 86.89 | | | | |
| 11 | 46.72 | 4.40 | 1.49700 | 81.6 | 0.5375 | 0.8236 |
| 12 | -75.42 | 0.1 | | | | |
| 13 | 37.82 | 3.20 | 1.74950 | 35.3 | 0.5869 | 0.7140 |
| 14 | 17.47 | 2.90 | 1.49700 | 81.6 | 0.5375 | 0.8236 |
| 15 | -126.80 | D3 48.67 ÷ 5.5 | | | | |
| 16 | -32.81 | 1.94 | 1.67270 | 32.1 | 0.5988 | 0.7046 |
| 17 | -16.80 | 1.2 | 1.51633 | 64.1 | 0.5353 | 0.8687 |
| 18 | 47.26 | | | | | |

In den Spalten der Tabelle sind von links nach rechts die Flächennummer, der Krümmungsradius, der Abstand zur nächsten Fläche, die Brechzahl $n_d$, die Dispersion $\nu_d$ und die partiellen Teildispersionen $P_{g,F}$ und $P_{C,t}$ aufgelistet. Es bedeuten $n_d$ der Brechungsindex, $\nu_d = (n_d - 1) / (n_F - n_c)$ die Abbezahl, $P_{g,F} = (n_g - n_F) / (n_F - n_c)$ die relative Teildispersion für die Wellenlängen $g$ und $F$, und $P_{c,t} = (n_C - n_t) / (n_F - n_c)$ die relative Teildispersion für die Wellenlängen $C$ und $t$. Ein Luftabstand ist durch eine Leerzeile in der Materialangabe gekennzeichnet. D1, D2 und D3 sind die veränderlichen Abstände.

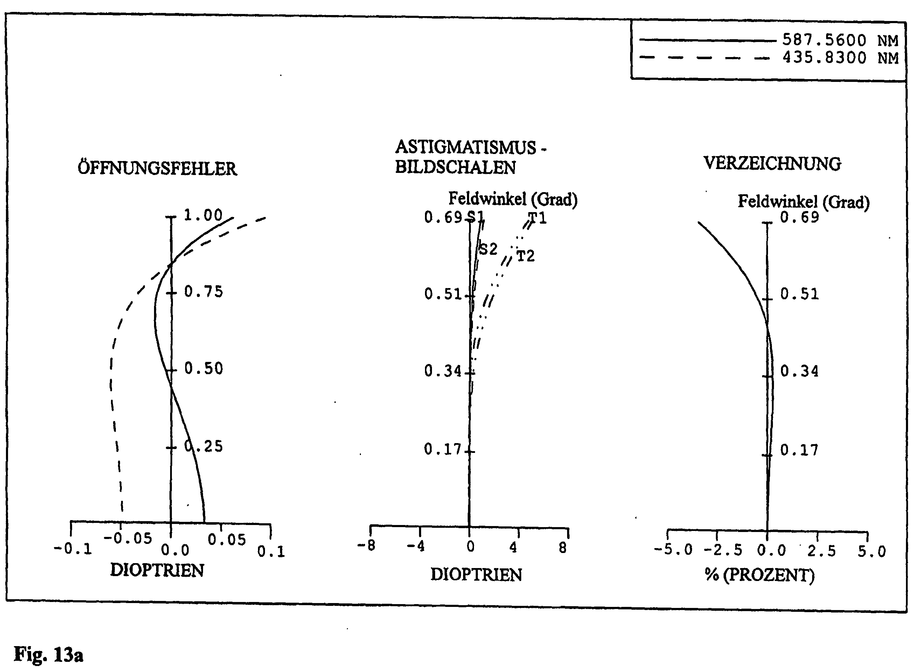

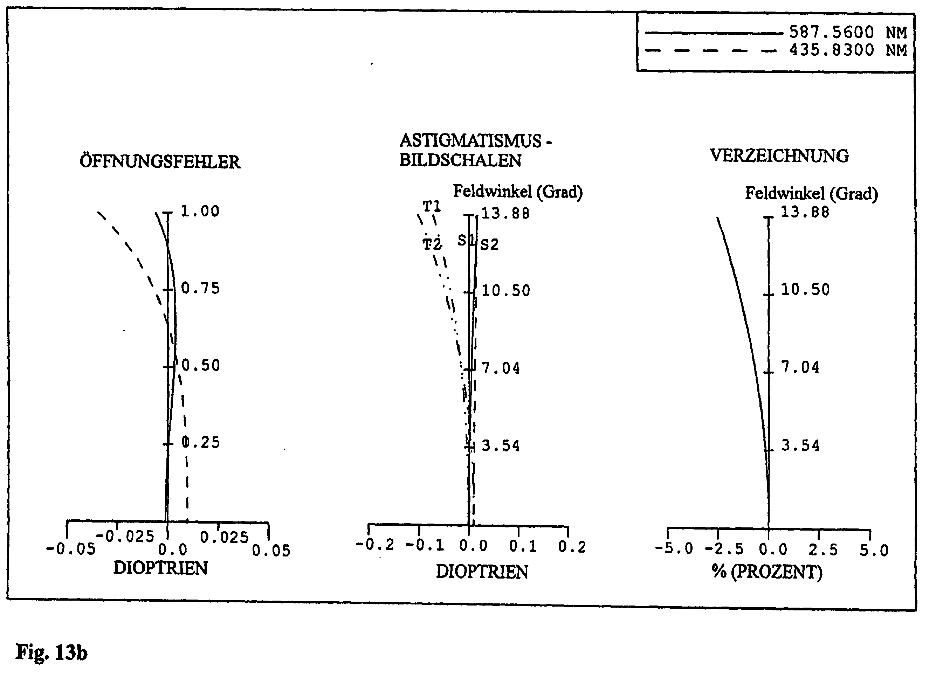

Figur 13 zeigt die Abbildungsleistung des Zooms gemäß vierter Ausführungsform in gewohnter Darstellung für eine Zoomvergrößerung von VZO = 5,66 in Figur 13a) und für eine Zoomvergrößerung von VZO = 0,28 in Figur 13b). Da der Zoom ähnlich dem im ersten Ausführungsbeispiel Beschriebenen aufgebaut ist, gelten auch hier die analogen Erklärungen.

## Liste der Bezeichnungen

1 - Afokaler Zoom
2 - Optische Achse des Zooms

5 - Oberer Randstrahl
6 - Unterer Randstrahl

9 - Objekt im vorderen Brennpunkt des Objektivs
10 - Objektiv
11, 11L und 11R - Tubuslinse, bei Stereomikroskopen im linken oder rechten Kanal

12, 12L und 12R - Zwischenbild, bei Stereomikroskopen im linken oder rechten Kanal

13, 13L und 13R - Okular, bei Stereomikroskopen im linken oder rechten Kanal

14 - Achse des Objektivs 10

15L und 15 R- Linker und rechter Betrachtungskanal bei Stereomikroskopen

16L und 16R- Bildumkehrsysteme im linken und rechten Beobachtungskanal

17, 17L und 17R - Auge, linkes und rechtes Auge

55, 56 - verkittete Linsen der Baugruppe G4

57, 58 - verkittete Linsen der Baugruppe G1

59 - Einzellinse der Baugruppe G1

AP - Durchmesser der Austrittspupille eines Mikroskops

D12 - Abstand zwischen den Zoomgliedern G1 und G2

D23 - Abstand zwischen den Zoomgliedern G2 und G3

D34 - Abstand zwischen den Zoomgliedern G3 und G4

EP - Durchmesser der Eintrittspupille des Zooms

ENP - Durchmesser der Eintrittspupille des Zooms bei maximaler Vergrösserung

f1 - Brennweite der 1. Linsengruppe G1

f2 - Brennweite der 2. Linsengruppe G2

f3 - Brennweite der 3. Linsengruppe G3

f4 - Brennweite der 4. Linsengruppe G4

fO - Brennweite des Objektivs

fT - Brennweite der Tubuslinse

G1 - optische Baugruppe des 1. Zoomgliedes

G2 - optische Baugruppe des 2. Zoomgliedes

G3 - optische Baugruppe des 3. Zoomgliedes

G4 - optische Baugruppe des 4. Zoomgliedes

k - Längenfaktor

L - mechanische Baulänge des Zooms, gegeben durch den Abstand der äusseren Scheitel der Gruppen G1 und G4

nA - numerische Apertur des Objektivs

u, uR, uL - halber Öffnungswinkel des Strahlenkegels mit Spitze in der Objektmitte, der durch ENP begrenzt wird

VZO - Vergrösserung des Zooms

wA - Austrittsfeldwinkel aus einem Fernrohr/Zoom

wE - Eintrittsfeldwinkel in ein Fernrohr/Zoom

w1 - Eintrittsfeldwinkel des Zooms bei minimaler Zoomvergrösserung

wL, wR - Winkel zur optischen Achse 14 des Strahls, der nach der Brechung im Objektiv 10 die optische Achse des linken oder rechten Beobachtungskanals 15L und 15R bildet.

z - Zoomfaktor = maximale Zoomvergrösserung/minimale Zoomvergrösserung

**Verwendete Bedingungen**

(B1) $VZO \leq 41 \times ENP/fT$

(B2) $\tan(w1) \geq 0{,}268 \times z/ENP$

(B3) $L / ENP \leq 1{,}37 \times \sqrt{z}$

(B4) f1 / ENP ≤ 3,5

**Patentansprüche**

1. Mikroskop mit einem afokalen Zoom (1) und mit einer Tubuslinse (11) der Brennweite fT, wobei der Zoom (1) von der Objektseite aus gesehen aus vier aufeinanderfolgenden optischen Baugruppen (G1, G2, G3, G4) besteht, wobei die erste Baugruppe (G1) eine positive Brennweite (f1), die zweite Baugruppe (G2) eine negative Brennweite (f2), die dritte Baugruppe (G3) eine positive Brennweite (f3) und die vierte Baugruppe (G4) eine negative Brennweite (f4) aufweist und die erste und vierte Baugruppe (G1, G4) ortsfest angeordnet sind, und wobei zur Veränderung der Vergrößerung des Zooms (1) die zweite und dritte Baugruppe (G2, G3) beweglich angeordnet sind, wobei die Zoomvergrößerung mit zunehmendem Abstand (D23) zwischen den beiden Baugruppen (G2, G3) abnimmt,
für den Zoomfaktor z gilt: 15 < z ≤ 20, und **dadurch gekennzeichnet, dass** die Vergrößerung (VZO) des Zooms (1) folgende Bedingung erfüllt:

$$VZO \leq 41 \times ENP/fT,$$

wobei ENP den Durchmesser der Zoomeintrittspupille bei maximaler Vergrößerung des Zooms (1) und fT die Brennweite der Tubuslinse (11) des Mikroskops bezeichnet, und wobei ENP > 21mm.

2. Mikroskop nach Anspruch 1, **dadurch gekennzeichnet, dass** der Eintrittsfeldwinkel (wl) des Zooms (1) bei minimaler Zoomvergrößerung die Bedingung

$$\tan(w1) \geq 0,268 \text{ mm} \times z/ENP$$

erfüllt.

3. Mikroskop nach Anspruch 1 oder 2, **dadurch gekennzeichnet, dass** der Durchmesser der Zoomeintrittspupille (ENP) bei maximaler Zoomvergrößerung die Bedingung 21 mm < ENP ≤ 27 mm erfüllt.

4. Mikroskop nach einem der Ansprüche 1 bis 3, **dadurch gekennzeichnet, dass** für die Länge (L) des Zooms (1) folgende Bedingung erfüllt ist:

$$L/ENP \leq 1,37 \times \sqrt{z},$$

wobei z den Zoomfaktor und L die Länge des Zooms gemessen zwischen den äußeren Linsenscheitel der ortsfesten Baugruppen (G1, G4) bezeichnet.

5. Mikroskop nach einem der Ansprüche 1 bis 4, **dadurch gekennzeichnet, dass** der Zoom (1) die Bedingung

$$f1/ENP \leq 3,5$$

erfüllt.

6. Mikroskop nach einem der Ansprüche 1 bis 5, **dadurch gekennzeichnet, dass** der Zoom (1) aus höchstens elf Linsen zusammengesetzt ist.

7. Mikroskop nach einem der Ansprüche 1 bis 6, **dadurch gekennzeichnet, dass** die vierte Baugruppe (G4) des Zooms (1) aus höchstens zwei miteinander verkitteten Linsen (55, 56) besteht.

8. Mikroskop nach einem der Ansprüche 1 bis 7, **dadurch gekennzeichnet, dass** die erste Baugruppe (G1) des Zooms (1) aus höchstens einem Kittglied aus zwei miteinander verkitteten Linsen (57, 58) und einer Einzellinse (59) besteht, wobei von der Objektseite aus gesehen zuerst das Kittglied und anschließend die Einzellinse (59)

EP 1 361 467 B1

angeordnet ist, wobei die Einzellinse (59) bikonvex ist und im Kittglied die Linse (57) mit positiver Brechkraft zur Objektseite hin angeordnet ist.

9. Mikroskop nach einem der Ansprüche 1 bis 8, **gekennzeichnet durch** eine **durch** nachfolgende Tabelle spezifizierte Linsenanordnung des Zooms (1), wobei die Flächennummern 1 bis 5 der ersten Baugruppe (G1), die Flächennummern 6 bis 10 der zweiten Baugruppe (G2), die Flächennummern 11 bis 15 der dritten Baugruppe (G3) und die Flächennummern 16 bis 18 der vierten Baugruppe (G4) zugeordnet sind, und wobei ENP = 22,5 mm und z = 16:

| Flächennummer | Radius [mm] | Abstand [mm] | $n_d$ | $\nu_d$ | $P_{g,F}$ | $P_{C,t}$ |
|---|---|---|---|---|---|---|
| 1 | 61.31 | 4.55 | 1.49700 | 81.6 | 0.5375 | 0.8236 |
| 2 | -42.17 | 2.0 | 1.74400 | 44.8 | 0.5655 | 0.7507 |
| 3 | -775.05 | 0.1 | | | | |
| 4 | 92.37 | 3.35 | 1.49700 | 81.6 | 0.5375 | 0.8236 |
| 5 | -92.37 | D1 41.59 ÷ 5.51 | | | | |
| 6 | -42.45 | 1.5 | 1.48749 | 70.2 | 0.5300 | 0.8924 |
| 7 | 23.20 | 1.72 | | | | |
| 8 | -57.04 | 1.2 | 1.62041 | 60.3 | 0.5427 | 0.8291 |
| 9 | 12.31 | 2.6 | 1.78470 | 26.3 | 0.6135 | 0.6726 |
| 10 | 30.51 | D2 5.31 ÷ 78.67 | | | | |
| 11 | 44.65 | 2.46 | 1.49700 | 81.6 | 0.5375 | 0.8236 |
| 12 | -44.65 | 0.2 | | | | |
| 13 | 26.40 | 2.1 | 1.74950 | 35.3 | 0.5869 | 0.7140 |
| 14 | 13.95 | 5.1 | 1.49700 | 81.6 | 0.5375 | 0.8236 |
| 15 | 94.46 | D3 42.84 ÷ 5.56 | | | | |
| 16 | -26.60 | 2.2 | 1.67270 | 32.1 | 0.5988 | 0.7046 |
| 17 | -14.16 | 1.2 | 1.51633 | 64.1 | 0.5353 | 0.8687 |
| 18 | 45.96 | | | | | |

wobei in den Spalten der Tabelle die Flächennummer einer Linse oder eines Kittgliedes, der Krümmungsradius der jeweiligen Fläche, der Abstand zur nächsten Fläche, die Brechzahl ($n_d$), die Dispersion ($\nu_d$) und die partiellen Teildispersionen ($P_{g,F}$ und $P_{C,t}$) aufgelistet sind und $n_d$ der Brechungsindex, $\nu_d = (n_d - 1) / (n_F - n_C)$ die Abbezahl, $P_{g,F} = (n_g - n_F) / (n_F - n_C)$ die relative Teildispersion für die Wellenlängen $g$ und $F$, und $P_{C,t} = (n_C - n_t) / (n_F - n_C)$ die relative Teildispersion für die Wellenlängen $C$ und $t$ bedeuten, und wobei weiterhin ein Luftabstand **durch** eine Leerzeile in der Materialangabe gekennzeichnet ist und D1, D2 und D3 veränderliche Abstände bezeichnen.

**Claims**

1. Microscope having an afocal zoom (1) and a tube lens (11) of focal length fT, the zoom (1) consisting of four successive optical assemblies (G1, G2, G3, G4), viewed from the object end, the first assembly (G1) having a positive focal length (f1), the second assembly (G2) having a negative focal length (f2), the third assembly (G3) having a positive focal length (f3) and the fourth assembly (G4) having a negative focal length (f4) and the first and fourth assemblies (G1, G4) being fixedly mounted, while the second and third assemblies (G2, G3) are movably mounted for changing the magnification of the zoom (1), the zoom magnification decreasing as the distance (D23) between the two assemblies (G2, G3) increases, the zoom factor z being subject to the condition 15 < z ≤20, **characterised in that** the magnification (VZO) of the zoom (1) satisfies the following condition:

$$VZO \leq 41 \times ENP/fT,$$

where ENP is the diameter of the zoom entrance pupil at the maximum magnification of the zoom (1) and fT is the focal length of the tube lens (11) of the microscope, and
where ENP > 21 mm.

2.  Microscope according to claim 1, **characterised in that** the entrance field angle (w1) of the zoom (1) at the minimum zoom magnification satisfies the condition

$$\tan(w1) \geq 0.268 \text{ mm} \times z/ENP.$$

3.  Microscope according to claim 1 or 2, **characterised in that** the diameter of the zoom entrance pupil (ENP) at the maximum zoom magnification satisfies the condition 21 mm < ENP ≤27 mm.

4.  Microscope according to one of claims 1 to 3, **characterised in that** for the length (L) of the zoom (1) the following condition applies:

$$L/ENP \leq 1.37 \times \sqrt{z},$$

where z denotes the zoom factor and L denotes the length of the zoom measured between the outer lens vertices of the fixed assemblies (G1, G4).

5.  Microscope according to one of claims 1 to 4, **characterised in that** the zoom (1) satisfies the condition

$$f1/ENP \leq 3.5.$$

6.  Microscope according to one of claims 1 to 5, **characterised in that** the zoom (1) is composed of a maximum of eleven lenses.

7.  Microscope according to one of claims 1 to 6, **characterised in that** the fourth assembly (G4) of the zoom (1) consists of a maximum of two lenses (55, 56) cemented together.

8.  Microscope according to one of claims 1 to 7, **characterised in that** the first assembly (G1) of the zoom (1) consists of a maximum of one cemented component comprising two lenses (57, 58) cemented to one another and a single lens (59), where the cemented component is arranged first, followed by the single lens (59), viewed from the object end, the single lens (59) being biconvex and in the cemented component the lens (57) with the positive refractive power being disposed on the object side.

9.  Microscope according to one of claims 1 to 8, **characterised by** a lens arrangement in the zoom (1) as specified by the following Table, the surface numbers 1 to 5 being associated with the first assembly (G1), the surface numbers 6 to 10 being associated with the second assembly (G2), the surface numbers 11 to 15 being associated with the third assembly (G3) and the surface numbers 16 to 18 being associated with the fourth assembly (G4), while ENP = 22.5 mm and z = 16:

| surface no. | radius [mm] | distance [mm] | $n_d$ | $v_d$ | $P_{g,F}$ | $P_{C,t}$ |
|---|---|---|---|---|---|---|
| 1 | 61.31 | 4.55 | 1.49700 | 81.6 | 0.5375 | 0.8236 |
| 2 | -42.17 | 2.0 | 1.74400 | 44.8 | 0.5655 | 0.7507 |
| 3 | -775.05 | 0.1 | | | | |
| 4 | 92.37 | 3.35 | 1.49700 | 81.6 | 0.5375 | 0.8236 |
| 5 | -92.37 | D1 41.59 ÷ 5.51 | | | | |

(continued)

| surface no. | radius [mm] | distance [mm] | $n_d$ | $\nu_d$ | $P_{g,F}$ | $P_{C,t}$ |
|---|---|---|---|---|---|---|
| 6 | -42.45 | 1.5 | 1.48749 | 70.2 | 0.5300 | 0.8924 |
| 7 | 23.20 | 1.72 | | | | |
| 8 | -57.04 | 1.2 | 1.62041 | 60.3 | 0.5427 | 0.8291 |
| 9 | 12.31 | 2.6 | 1.78470 | 26.3 | 0.6135 | 0.6726 |
| 10 | 30.51 | D2 5.31 ÷ 78.67 | | | | |
| 11 | 44.65 | 2.46 | 1.49700 | 81.6 | 0.5375 | 0.8236 |
| 12 | -44.65 | 0.2 | | | | |
| 13 | 26.40 | 2.1 | 1.74950 | 35.3 | 0.5869 | 0.7140 |
| 14 | 13.95 | 5.1 | 1.49700 | 81.6 | 0.5375 | 0.8236 |
| 15 | 94.46 | D3 42.84 ÷ 5.56 | | | | |
| 16 | -26.60 | 2.2 | 1.67270 | 32.1 | 0.5988 | 0.7046 |
| 17 | -14.16 | 1.2 | 1.51633 | 64.1 | 0.5353 | 0.8687 |
| 18 | 45.96 | | | | | |

while the surface number of a lens or of a cemented component, the radius of curvature of the surface, the distance from the next surface, the refractive index ($n_d$), the dispersion $\nu_d$ and the partial dispersions ($P_{g,F}$ and $P_{c,t}$) are listed in the columns of the Table and $n_d$ denotes the refractive index, $\nu_d = (n_d\text{-}1) / (n_p - n_c)$ denotes the Abbe number, $P_{g,F} = (n_g - n_F) / (n_F - n_c)$ denotes the relative partial dispersion for the wavelengths $g$ and $F$, and $P_{C,t} = (n_c - n_t) / (n_F - n_c)$ denotes the relative partial dispersion for the wavelengths C and t, while furthermore an air gap is denoted by an empty line in the material specification and D1, D2 and D3 denote variable distances.

## Revendications

**1.** Microscope comportant un zoom (1) afocal et une lentille de tube (11) de focale fT, le zoom (1), vu depuis le côté objet, étant constitué par quatre ensembles optiques (G1, G2, G3, G4) consécutifs, le premier ensemble (G1) présentant une focale positive (f1), le deuxième ensemble (G2) présentant une focale négative (f2), le troisième ensemble (G3) présentant une focale positive (f3) et le quatrième ensemble (G4) présentant une focale négative (f4), le premier ensemble (G1) et le quatrième ensemble (G4) étant agencés stationnaires, et pour modifier l'agrandissement du zoom (1), le deuxième ensemble (G2) et le troisième ensemble (G3) sont agencés mobiles, l'agrandissement du zoom diminuant avec l'augmentation de la distance (D23) entre les deux ensembles (G2, G3), et pour le facteur de zoom z s'applique la relation $15 < z \leq 20$,
**caractérisé en ce que** l'agrandissement (VZO) du zoom (1) satisfait la condition suivante :

$$VZO \leq 41 \times ENP/fT,$$

dans laquelle ENP désigne le diamètre de la pupille d'entrée du zoom pour un agrandissement maximum du zoom (1), et fT désigne la focale de la lentille de tube (11) du microscope, et dans laquelle ENP > 21 mm.

**2.** Microscope selon la revendication 1, **caractérisé en ce qu'**en cas d'agrandissement minimum du zoom, l'angle de champ d'entrée (wl) du zoom (1) satisfait la condition

$$\tan(w1) \geq 0,268 \text{ mm} \times z/ENP.$$

**3.** Microscope selon l'une ou l'autre des revendications 1 et 2, **caractérisé en ce qu'**en cas d'agrandissement maximum du zoom, le diamètre de la pupille d'entrée du zoom (ENP) satisfait la condition

21 mm < ENP ≤27 mm.

**4.** Microscope selon l'une des revendications 1 à 3, **caractérisé en ce que** pour la longueur (L) du zoom (1), la condition suivante est satisfaite :

$$L/ENP \leq 1{,}37 \times \sqrt{z},$$

z désignant le facteur de zoom et L la longueur du zoom, mesurée entre les sommets extérieurs de lentilles des ensembles stationnaires (G1, G4).

**5.** Microscope selon l'une des revendications 1 à 4, **caractérisé en ce que** le zoom (1) satisfait la condition :

$$fl/ENP \leq 3{,}5.$$

**6.** Microscope selon l'une des revendications 1 à 5, **caractérisé en ce que** le zoom ( 1 ) est composé par au plus onze lentilles.

**7.** Microscope selon l'une des revendications 1 à 6, **caractérisé en ce que** le quatrième ensemble (G4) du zoom (1) est constitué par au plus deux lentilles (55, 56) collées l'une à l'autre.

**8.** Microscope selon l'une des revendications 1 à 7, **caractérisé en ce que** le premier ensemble (G1) du zoom (1) est constitué d'au plus un élément collé formé par deux lentilles (57, 58) collées l'une à l'autre et par une lentille individuelle (59), et vu depuis le côté objet est agencé tout d'abord l'élément collé et ensuite la lentille individuelle (59), la lentille individuelle (59) étant biconvexe, et dans l'élément collé, la lentille (57) à réfringence positive étant agencée vers le côté objet.

**9.** Microscope selon l'une des revendications 1 à 8, **caractérisé par** un agencement de lentille du zoom (1), spécifié dans le tableau suivant, les numéros de surface 1 à 5 étant associés au premier ensemble (G1), les numéros de surface 6 à 10 étant associés au deuxième ensemble (G2), les numéros de surface 11 à 15 étant associés au troisième ensemble (G3) et les numéros de surface 16 à 18 étant associés au quatrième ensemble (G4), et ENP = 22,5 mm et z = 16 :

| Numéro de surface | Rayon (mm) | Distance (mm) | $n_d$ | $\nu_d$ | $P_{g,F}$ | $P_{C,t}$ |
|---|---|---|---|---|---|---|
| 1 | 61.31 | 4.55 | 1.49700 | 81.6 | 0.5375 | 0.8236 |
| 2 | -42.17 | 2.0 | 1.74400 | 44.8 | 0.5655 | 0.7507 |
| 3 | -775.05 | 0.1 | | | | |
| 4 | 92.37 | 3.35 | 1.49700 | 81.6 | 0.5375 | 0.8236 |
| 5 | -92.37 | D1 41.59÷ 5.51 | | | | |
| 6 | -42.45 | 1.5 | 1.48749 | 70.2 | 0.5300 | 0.8924 |
| 7 | 23.20 | 1.72 | | | | |
| 8 | -57.04 | 1.2 | 1.62041 | 60.3 | 0.5427 | 0.8291 |
| 9 | 12.31 | 2.6 | 1.78470 | 26.3 | 0.6135 | 0.6726 |
| 10 | 30.51 | D2 5.31 ÷ 78.67 | | | | |
| 11 | 44.65 | 2.46 | 1.49700 | 81.6 | 0.5375 | 0.8236 |
| 12 | -44.65 | 0.2 | | | | |
| 13 | 26.40 | 2.1 | 1.74950 | 35.3 | 0.5869 | 0.7140 |
| 14 | 13.95 | 5.1 | 1.49700 | 81.6 | 0.5375 | 0.8236 |

(suite)

| Numéro de surface | Rayon (mm) | Distance (mm) | $n_d$ | $\nu_d$ | $P_{g,F}$ | $P_{C,t}$ |
|---|---|---|---|---|---|---|
| 15 | 94.46 | D3 42.84÷5.56 | | | | |
| 16 | -26.60 | 2.2 | 1.67270 | 32.1 | 0.5988 | 0.7046 |
| 17 | -14.16 | 1.2 | 1.51633 | 64.1 | 0.5353 | 0.8687 |
| 18 | 45.96 | | | | | |

et dans les colonnes du tableau sont énoncés les numéros de surface d'une lentille ou d'un élément collé, le rayon de courbure de la surface respective, la distance à la surface suivante, l'indice de réfraction ($n_d$), la dispersion ($\nu_d$) et les dispersions partielles ($P_{g,F}$ et $P_{C,t}$) et $n_d$ représente l'indice de réfraction, $\nu_d = (n_d - 1) / (n_F - n_C)$ représente le nombre d'Abbe, $P_{g,F} = (n_g - n_F) / (n_F - n_C)$ représente la dispersion partielle relative pour les longueurs d'ondes g et F, et $P_{C,t} = (n_C - n_t) / (n_F - n_C)$ représente la dispersion partielle relative pour les longueurs d'ondes C et t, et par ailleurs, un espace d'air étant **caractérisé par** une case vide au niveau de l'indication de matériau, et D1, D2 et D3 représentant des distances variables.

Stand der Technik

Fig. 1a)

Fig. 1b)

EP 1 361 467 B1

EP 1 361 467 B1

Stand der Technik

**Fig. 2**

Stand der Technik

**Fig. 3**

Fig. 4a

Fig. 4b

Fig. 4

Fig. 5a

Fig. 5b

Fig. 5

Fig. 6a

Fig. 6b

Fig. 6

**ÖFFNUNGSFEHLER**

**ASTIGMATISMUS - BILDSCHALEN**

**VERZEICHNUNG**

Fig. 7a

EP 1 361 467 B1

ÖFFNUNGSFEHLER

ASTIGMATISMUS -
BILDSCHALEN

VERZEICHNUNG

Fig. 7b

Fig. 8a

Fig. 8b

Fig. 8

ÖFFNUNGSFEHLER

ASTIGMATISMUS -
BILDSCHALEN

VERZEICHNUNG

587.5600 NM
435.8300 NM

Feldwinkel (Grad)

Feldwinkel (Grad)

1.00

0.75

0.50

0.25

0.69  S1      T1

S2      T2

0.51

0.34

0.17

0.69

0.51

0.34

0.17

-0.08  -0.04  0.0  0.04  0.08
DIOPTRIEN

-5.0  -2.5  0.0  2.5  5.0
DIOPTRIEN

-5.0  -2.5  0.0  2.5  5.0
% (PROZENT)

**Fig. 9a**

EP 1 361 467 B1

587.5600 NM
435.8300 NM

VERZEICHNUNG

Feldwinkel (Grad)

11.14

8.40

5.62

2.82

-5.0  -2.5  0.0  2.5  5.0
% (PROZENT)

ASTIGMATISMUS -
BILDSCHALEN

Feldwinkel (Grad)

11.14

8.40  S2

S1

5.62

T1  2.82

T2

-0.08  -0.04  0.0  0.04  0.08
DIOPTRIEN

ÖFFNUNGSFEHLER

1.00

0.75

0.50

0.25

-0.05  -0.025  0.0  0.025  0.05
DIOPTRIEN

Fig. 9b

Fig. 10a

Fig. 10b

Fig. 10

EP 1 361 467 B1

**ÖFFNUNGSFEHLER**

**ASTIGMATISMUS -
BILDSCHALEN**

**VERZEICHNUNG**

Fig. 11a

ÖFFNUNGSFEHLER

ASTIGMATISMUS -
BILDSCHALEN

VERZEICHNUNG

Fig. 11b

Fig. 12a

Fig. 12b

Fig. 12

**ÖFFNUNGSFEHLER**

1.00
0.75
0.50
0.25

-0.1  -0.05  0.0  0.05  0.1

DIOPTRIEN

**ASTIGMATISMUS - BILDSCHALEN**

Feldwinkel (Grad)

0.69 S1 — T1
S2 — T2
0.51
0.34
0.17

-8  -4  0  4  8

DIOPTRIEN

**VERZEICHNUNG**

Feldwinkel (Grad)

0.69
0.51
0.34
0.17

-5.0  -2.5  0.0  2.5  5.0

% (PROZENT)

587.5600 NM
435.8300 NM

**Fig. 13a**

Fig. 13b